# EUROPEAN PATENT SPECIFICATION

(11) **EP 3 152 657 B1**
(45) Date of publication and mention of the grant of the patent: **22.09.2021**
(21) Application number: 15807288.4
(22) Date of filing: 09.06.2015
(51) Int. Cl.: G06F 8/61, G06F 9/451

(54) **INSTALLATION INTERFACE PRESENTATION METHOD AND APPARATUS**
VERFAHREN UND VORRICHTUNG ZUR INSTALLATIONSSCHNITTSTELLENPRÄSENTATION
PROCÉDÉ ET APPAREIL DE PRÉSENTATION D'INTERFACE D'INSTALLATION

(30) Priority: 09.06.2014 CN 201410253414
(43) Date of publication of application: 12.04.2017
(73) Proprietor: Tencent Technology (Shenzhen) Company Limited, Shenzhen, Guangdong 518000 (CN)
(72) Inventor: HE, Jiongchen, Shenzhen Guangdong 518000 (CN); DU, Jian, Shenzhen Guangdong 518000 (CN); PAN, Weibin, Shenzhen Guangdong 518000 (CN); YANG, Xiao, Shenzhen Guangdong 518000 (CN)
(74) Representative: EP&C
(86) International application number: PCT/CN2015/081097
(87) International publication number: WO 2015/188741

(56) References cited:
- US-A1- 2007 192 723
- US-A1- 2007 245 344
- US-A1- 2008 126 974
- US-A1- 2008 256 473
- US-A1- 2009 113 334
- None

## Description

### FIELD OF THE TECHNOLOGY

The present disclosure relates to the field of computer technologies, and in particular, to an installation interface presentation method and apparatus.

### BACKGROUND OF THE DISCLOSURE

When a terminal runs an installation package of an application program to install the application program, an installation interface of the application program is generally presented in a process of installation, and the installation interface is used to present information of the application program.

An existing installation interface presentation method includes: in a process in which a terminal runs an installation package of an application program, drawing a progress bar used for presenting an installation progress on an installation interface of the application program; acquiring the installation progress of the application program every other predetermined time; and drawing the acquired installation progress into the progress bar.

In a process of implementing the present disclosure, the inventor finds that at least the following defect exists in the existing technology.

Because the terminal needs to update the installation progress of the application program in the progress bar in real time, the terminal needs to draw the installation progress into the progress bar every time the terminal acquires the installation progress, and drawings for multiple times consume a great number of processing resources of the terminal.

US 2009/0113334 discloses a method, system and computer-usable medium for providing graphical completion status information for the management of serial computer operations that are forked into parallel operations. A first interactive progress bar, comprising a plurality of progress indicator segments, is implemented to show the completion status of a composite application. A second progress bar is implemented for each element of the composite application as it is executed. Elements that are serially executed may require prerequisite or dependent operations. Forking operations are performed to execute elements in parallel. One or more progress indicator segments are selected to display information about their related computer operations. The user interacts with the information to pause, modify, reorder, reverse, retarget, or reverse the selected computer operations.

### SUMMARY

In order to solve a problem of consuming a great number of processing resources of a terminal when the terminal draws an installation progress of an application program into a progress bar for multiple times, embodiments of the present invention provide an installation interface presentation method and apparatus. The technical solutions are described as follows.

According to a first aspect, an embodiment of the present invention provides an installation interface presentation method, including:
obtaining two interfaces by performing an i^{th} cutting operation on an i-1^{th} installation interface of an application program in a process of installing the application program, where 1<i≤j, i is an integer, j is an integer, j is total number of times of cutting the installation interface of the application program, installation information is located in a center of the installation interface;
selecting an interface with the installation information from the two interfaces and determining the selected interface as an i^{th} installation interface after the i^{th} cutting operation is completed;
replacing the i-1^{th} installation interface with the i^{th} installation interface, and presenting the i^{th} installation interface; and
updating i with i+1, and proceeding to perform the step of performing an i^{th} cutting operation on an i-1^{th} installation interface of an application program to divide the (i-1)^{th} installation interface into two interfaces,
   wherein for j= 4 the method comprises:
   (I) for i=1, determining an upper boundary of a zeroth installation interface and generating a cutting origin at a predetermined location on the upper boundary left from the installation information, wherein the cutting origin of a 1^{st} cutting operation on a zeroth installation interface starts to advance downward along a perpendicular direction from the upper boundary of the zeroth installation interface, wherein when the cutting origin of the 1st cutting operation arrives at a lower boundary of the zeroth installation interface, the 1^{st} cutting operation is completed, and the zeroth installation interface is replaced with an obtained 1^{st} installation interface, and the 1^{st} installation interface is presented,
   (II) for i=2, determining a left boundary of the 1^{st} installation interface and generating a cutting origin at a predetermined location on the left boundary above the installation information, wherein the cutting origin of a 2^{nd} cutting operation on the 1^{st} installation interface starts to advance to the right along a horizontal direction from the left boundary of the 1^{st} installation interface, wherein when the cutting origin of the 2^{nd} cutting operation arrives at a right boundary of the 1^{st} installation interface, the 2^{nd} cutting operation is completed, and the 1^{st} installation interface is replaced with an obtained 2^{nd} installation interface, and the 2^{nd} installation interface is presented,
   (III) for i=3, determining an upper boundary of the 2^{nd} installation interface and generating a cutting origin at a predetermined location on the upper boundary right from the installation information, wherein the cutting origin of a 3^{rd} cutting operation on the 2^{nd} installation interface starts to advance downward along a perpendicular direction from the upper boundary of the 2^{nd} installation interface, wherein when the cutting origin of the 3rd cutting operation arrives at a lower boundary of the 2nd installation interface, the 3rd cutting operation is completed, and the 2nd installation interface is replaced with an obtained 3rd installation interface, and the 3rd installation interface is presented,
   (IV) for i=4, determining a left boundary of the 3^{rd} installation interface and generating a cutting origin at a predetermined location on the left boundary below the installation information, wherein the a cutting origin of a 4th cutting operation on the 3rd installation interface starts to advance to the right along a horizontal direction from the left boundary of the 3rd installation interface, wherein when the cutting origin of the 4th cutting operation arrives at a right boundary of the 3rd installation interface, the 4th cutting operation is completed, and the 3rd installation interface is replaced with an obtained 4th installation interface, and the 4th installation interface is presented.

According to a second aspect, an embodiment of the present invention provides an installation interface presentation apparatus, including:
one or more processors;
a memory; and
a plurality of program modules stored in the memory and to be executed by the one or more processors, the plurality of program modules further comprising:
   an interface cutting module, configured to obtain two interfaces by performing an i^{th} cutting operation on an i-1^{th} installation interface of an application program in a process of installing the application program, where 1<i≤j, i is an integer, j is an integer, j is total number of times of cutting the installation interface of the application program, installation information is located in a center of the installation interface;
   an interface determining module, configured to select an interface with the installation information from the two interfaces and determine the selected interface as an i^{th} installation interface after the interface cutting module completes the i^{th} cutting operation;
   an interface presentation module, configured to replace the i-1^{th} installation interface with the i^{th} installation interface determined by the interface determining module, and present the i^{th} installation interface; and
   an operation cycling module, configured to update i with i+1, and proceed to perform the operation of performing an i^{th} cutting operation on an i-1^{th} installation interface of an application program to divide the (i-1)^{th} installation interface into two interfaces,
wherein for j = 4,
   (I), for i=1, an upper boundary of a zeroth installation interface is determined and a cutting origin is generated at a predetermined location on the upper boundary left from the installation information, wherein the cutting origin of a 1^{st} cutting operation on a zeroth installation interface starts to advance downward along a perpendicular direction from the upper boundary of the zeroth installation interface, wherein when the cutting origin of the 1st cutting operation arrives at a lower boundary of the zeroth installation interface, the 1^{st} cutting operation is completed, and the zeroth installation interface is replaced with an obtained 1^{st} installation interface, and the 1^{st} installation interface is presented,
   (II), for i=2, a left boundary of the 1^{st} installation interface is determined and a cutting origin is generated at a predetermined location on the left boundary above the installation information, wherein the cutting origin of a 2nd cutting operation on the 1st installation interface starts to advance to the right along a horizontal direction from the left boundary of the 1st installation interface, wherein when the cutting origin of the 2nd cutting operation arrives at a right boundary of the 1st installation interface, the 2nd cutting operation is completed, and the 1st installation interface is replaced with an obtained 2nd installation interface, and the 2nd installation interface is presented,
   (III), for i=3, an upper boundary of the 2^{nd} installation interface is determined and a cutting origin is generated at a predetermined location on the upper boundary right from the installation information, wherein the cutting origin of a 3rd cutting operation on the 2nd installation interface starts to advance downward along a perpendicular direction from the upper boundary of the 2nd installation interface, wherein when the cutting origin of the 3rd cutting operation arrives at a lower boundary of the 2nd installation interface, the 3rd cutting operation is completed, and the 2nd installation interface is replaced with an obtained 3rd installation interface, and the 3rd installation interface is presented,
   (IV), for i=4, a left boundary of the 3rd installation interface is determined and a cutting origin is generated at a predetermined location on the left boundary below the installation information, wherein the cutting origin of a 4th cutting operation on the 3rd installation interface starts to advance to the right along a horizontal direction from the left boundary of the 3rd installation interface, wherein when the cutting origin of the 4th cutting operation arrives at a right boundary of the 3rd installation interface, the 4th cutting operation is completed, and the 3rd installation interface is replaced with an obtained 4th installation interface, and the 4th installation interface is presented.

According to a third aspect, an embodiment of the present invention provides a computer readable storage medium, which stores a computer executable instruction, when executed by a processor, the computer executable instruction performing an installation interface presentation method, the installation interface presentation method including:
obtaining two interfaces by performing an i^{th} cutting operation on an i-1^{th} installation interface of an application program in a process of installing the application program, where 1<i≤j, i is an integer, j is an integer, j is total number of times of cutting the installation interface of the application program, installation information is located in a center of the installation interface;
selecting an interface with the installation information from the two interfaces and determining the selected interface as an i^{th} installation interface after the i^{th} cutting operation is completed;
replacing the i-1^{th} installation interface with the i^{th} installation interface, and presenting the i^{th} installation interface; and
updating i with i+1, and proceeding to perform the step of performing an i^{th} cutting operation on an i-1^{th} installation interface of an application program to divide the (i-1)^{th} installation interface into two interfaces,
wherein for j = 4 the method comprises,
   (I), for i=1, an upper boundary of a zeroth installation interface is determined and a cutting origin is generated at a predetermined location on the upper boundary left from the installation information, wherein the cutting origin of a 1^{st} cutting operation on a zeroth installation interface starts to advance downward along a perpendicular direction from the upper boundary of the zeroth installation interface, wherein when the cutting origin of the 1st cutting operation arrives at a lower boundary of the zeroth installation interface, the 1^{st} cutting operation is completed, and the zeroth installation interface is replaced with an obtained 1^{st} installation interface, and the 1^{st} installation interface is presented,
   (II), for i=2, a left boundary of the 1^{st} installation interface is determined and a cutting origin is generated at a predetermined location on the left boundary above the installation information, wherein the cutting origin of a 2^{nd} cutting operation on the 1^{st} installation interface starts to advance to the right along a horizontal direction from the left boundary of the 1^{st} installation interface, wherein when the cutting origin of the 2^{nd} cutting operation arrives at a right boundary of the 1^{st} installation interface, the 2^{nd} cutting operation is completed, and the 1^{st} installation interface is replaced with an obtained 2^{nd} installation interface, and the 2^{nd} installation interface is presented,
   (III), for i=3, an upper boundary of the 2^{nd} installation interface is determined and a cutting origin is generated at a predetermined location on the upper boundary right from the installation information, wherein the cutting origin of a 3^{rd} cutting operation on the 2^{nd} installation interface starts to advance downward along a perpendicular direction from the upper boundary of the 2^{nd} installation interface, wherein when the cutting origin of the 3^{rd} cutting operation arrives at a lower boundary of the 2^{nd} installation interface, the 3^{rd} cutting operation is completed, and the 2^{nd} installation interface is replaced with an obtained 3^{rd} installation interface, and the 3^{rd} installation interface is presented,
   (IV), for i=4, a left boundary of the 3rd installation interface is determined and a cutting origin is generated at a predetermined location on the left boundary below the installation information, wherein the cutting origin of a 4^{th} cutting operation on the 3^{rd} installation interface starts to advance to the right along a horizontal direction from the left boundary of the 3rd installation interface, wherein when the cutting origin of the 4^{th} cutting operation arrives at a right boundary of the 3^{rd} installation interface, the 4^{th} cutting operation is completed, and the 3^{rd} installation interface is replaced with an obtained 4^{th} installation interface, and the 4^{th} installation interface is presented.

Two interfaces are obtained by performing an i^{th} cutting operation on an i-1^{th} installation interface of an application program in a process of installing the application program, installation information is located in a center of the installation interface, and the installation interface is cut in horizontal or vertical direction in the cutting operation; a reserved i^{th} installation interface is determined after the i^{th} cutting operation is completed; the i-1^{th} installation interface is replaced with the i^{th} installation interface, and the i^{th} installation interface is presented; and i is updated with i+1, and the step of performing an i^{th} cutting operation on an i-1^{th} installation interface of an application program proceeds to be performed.

An installation interface can be gradually decreased by cutting the installation interface of the application program, and a speed of an installation progress is embodied by using a size of the installation interface. Because the number of times of replacing the installation interface is much less than the number of times of drawing the installation progress into a progress bar, a problem of consuming a great number of processing resources of a terminal when the terminal draws the installation progress of the application program into the progress bar for multiple times is solved, and an effect of saving the processing resources of the terminal is achieved.

### BRIEF DESCRIPTION OF THE DRAWINGS

To describe the technical solutions of embodiments of the present invention more clearly, the following briefly introduces the accompanying drawings required for describing the embodiments. Apparently, the accompanying drawings in the following description show only some embodiments of the present invention, and a person of ordinary skill in the art may still derive other drawings from these accompanying drawings without creative efforts.
FIG. 1 is a method flowchart of an installation interface presentation method according to an embodiment of the present invention;
FIG. 2A is a method flowchart of an installation interface presentation method according to another embodiment of the present invention;
FIG. 2B is a schematic diagram of a first interface of an installation interface presentation method according to an embodiment of the present invention;
FIG. 2C is a schematic diagram of a second interface of an installation interface presentation method according to an embodiment of the present invention;
FIG. 2D is a schematic diagram of a third interface of an installation interface presentation method according to an embodiment of the present invention;
FIG. 2E is a schematic diagram of a fourth interface of an installation interface presentation method according to an embodiment of the present invention;
FIG. 2F is a schematic diagram of a fifth interface of an installation interface presentation method according to an embodiment of the present invention;
FIG. 2G is a schematic diagram of a sixth interface of an installation interface presentation method according to an embodiment of the present invention;
FIG. 2H is a schematic diagram of a seventh interface of an installation interface presentation method according to an embodiment of the present invention;
FIG. 2I is a schematic diagram of an eighth interface of an installation interface presentation method according to an embodiment of the present invention;
FIG. 3 is a structural block diagram of an installation interface presentation apparatus according to an embodiment of the present invention; and
FIG. 4 is a structural block diagram of an installation interface presentation apparatus according to another embodiment of the present invention;
FIG. 5 shows a structural block diagram of an installation interface presentation apparatus 1100 according to an embodiment of the present invention.

### DESCRIPTION OF EMBODIMENTS

To make the objectives, technical solutions, and advantages of the present disclosure clearer, the following further describes the embodiments of the present invention in detail with reference to the accompanying drawings.

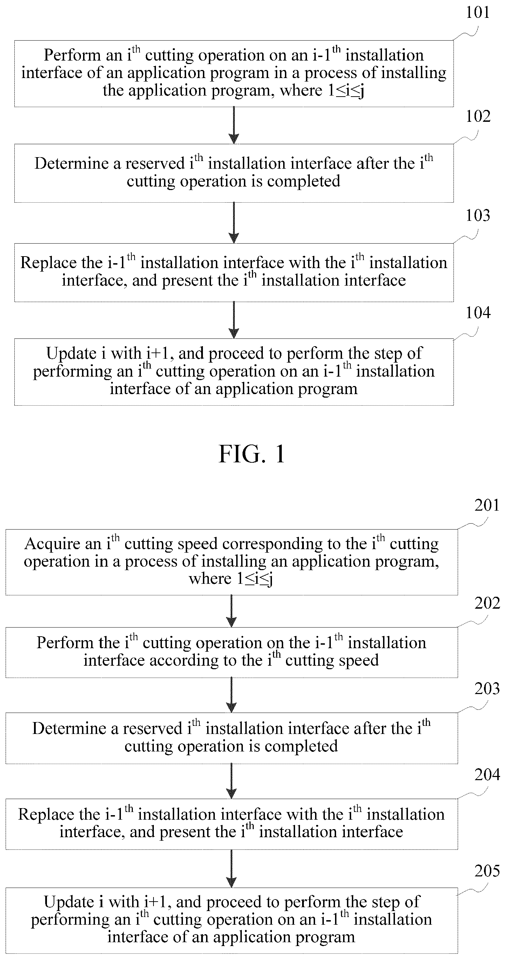

Referring to FIG. 1, FIG. 1 shows a method flowchart of an installation interface presentation method according to an embodiment of the present invention. The installation interface presentation method can be applied to a terminal, where the terminal may be a smart TV, a smartphone, a tablet computer, or the like. The installation interface presentation method includes:
Step 101: Perform an i^{th} cutting operation on an i-1^{th} installation interface of an application program in a process of installing the application program, where 1≤i≤j.

The installation interface refers to an interface that presents installation information of the application program in the terminal in the process of installing the application program. The installation information may include a name, an icon, a use protocol, and a function introduction of the application program, and the like.

The i-1^{th} installation interface refers to an installation interface presented in the terminal before the i^{th} cutting is performed.

J is the total number of times of cutting the installation interface of the application program. For example, when j=3, the installation interface of the application program is cut for three times.

Step 102: Determine a reserved i^{th} installation interface after the i^{th} cutting operation is completed.

The terminal may store installation interfaces, find an installation interface corresponding to the i^{th} cutting from the stored installation interfaces after the i^{th} cutting operation is completed, and determine that the installation interface is the reserved i^{th} installation interface.

Step 103: Replace the i-1^{th} installation interface with the i^{th} installation interface, and present the i^{th} installation interface.

The terminal presents the acquired i^{th} installation interface to replace the i-1^{th} installation interface presented formerly.

Step 104: Update i with i+1, and proceed to perform the step of performing an i^{th} cutting operation on an i-1^{th} installation interface of an application program.

When i<j, i is updated with i+1, and the performing the i^{th} cutting operation on the i-1^{th} installation interface proceeds; and when i=j, i is updated with a value of i+1 and the value is greater than j. At this moment, a cutting process ends.

In summary, in the installation interface presentation method according to this embodiment of the present invention, an i^{th} cutting operation is performed on an i-1^{th} installation interface of an application program in a process of installing the application program; a reserved i^{th} installation interface is determined after the i^{th} cutting operation is completed; the i-1^{th} installation interface is replaced with the i^{th} installation interface, and the i^{th} installation interface is presented; and i is updated with i+1, and the step of performing an i^{th} cutting operation on an i-1^{th} installation interface of an application program proceeds to be performed. An installation interface can be gradually decreased by cutting the installation interface of the application program, and a speed of an installation progress is embodied by using a size of the installation interface. Because the number of times of replacing the installation interface is much less than the number of times of drawing the installation progress into a progress bar, a problem of consuming a great number of processing resources of a terminal when the terminal draws the installation progress of the application program into the progress bar for multiple times is solved, and an effect of saving the processing resources of the terminal is achieved.

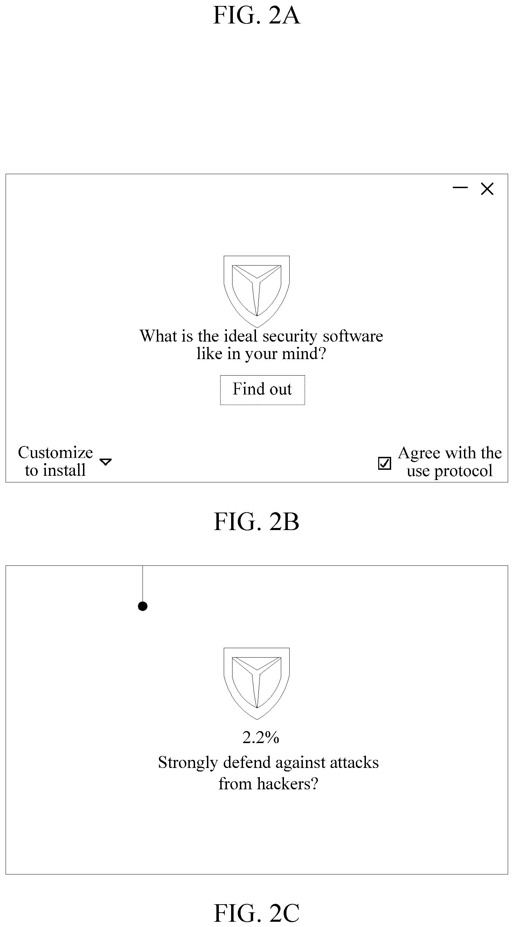

Referring to FIG. 2A, FIG. 2A shows a method flowchart of an installation interface presentation method according to another embodiment of the present invention. The installation interface presentation method can be applied to a terminal, where the terminal may be a smart TV, a smartphone, a tablet computer, or the like. The installation interface presentation method includes:

Step 201: Acquire an i^{th} cutting speed corresponding to an i^{th} cutting operation in a process of installing an application program, where 1≤i≤j.

In this embodiment, an installation progress of the application program is embodied by cutting an installation interface in the process of installing the application program. The installation interface refers to an interface that presents installation information of the application program in the terminal in the process of installing the application program. The installation information may include a name, an icon, a use protocol, and a function introduction of the application program, and the like.

The terminal may set the same cutting speed for a cutting operation each time, and then the terminal may acquire a cutting speed for this time before performing the cutting operation each time, and may also use a cutting speed acquired when performing a 1^{st} cutting operation as a cutting speed each time.

Optionally, the terminal may also set different cutting speeds for the cutting operation each time, and then the acquiring an i^{th} cutting speed corresponding to an i^{th} cutting operation includes:
1) searching a first correspondence for a cutting speed corresponding to i, and determining that the found cutting speed is the i^{th} cutting speed correspond to the i^{th} cutting operation; and/or
2) acquiring an installation progress of the application program, searching a second correspondence for a cutting speed corresponding to the installation progress, and determining that the found cutting speed is the i^{th} cutting speed correspond to the i^{th} cutting operation.

There are multiple methods for acquiring a cutting speed by the terminal. This embodiment is described by merely using two of the methods as examples, and details are as follows.

A first cutting speed acquiring method is that: the terminal presets the first correspondence, where the first correspondence stores a correspondence between i and the cutting speed; and the terminal can search the first correspondence for the cutting speed corresponding to i when performing the i^{th} cutting operation, and determine that the found cutting speed is the i^{th} cutting speed.

For example, the first correspondence stores "1-3 cm/s", "2-1 cm/s", "3-1.5 cm/s", and "4-6 cm/s". It is assumed that what is performed is the 2^{nd} cutting operation. The terminal finds in the first correspondence that "2" is corresponding to a cutting speed of "1 cm/s", and uses "1 cm/s" as the 2^{nd} cutting speed.

A second cutting speed acquiring method is that: because processing capabilities of different terminals are different, and the stronger a processing capability is, the faster an installation speed of an application program is, the different terminals have different installation speeds for a same application program. In order to make a cutting process more approximate to an actual process in which the application program is installed in the terminal, the terminal may further adjust the cutting speed according to the installation progress, so as to improve accuracy of cutting.

The terminal presets the second correspondence, where the second correspondence stores a correspondence between the installation progress and the cutting speed; and the terminal can acquire the installation progress of the application program when performing the i^{th} cutting operation, search the second correspondence for the cutting speed corresponding to the installation progress, and determine that the found cutting speed is the i^{th} cutting speed, where the second correspondence may be obtained through calculation according to a predetermined formula, and may also be set according to an empirical value.

For example, the second correspondence stores "1%∼10%-1 cm/s", "11%∼30%-1.5 cm/s", "31%∼70%-4 cm/s", and "71%∼100%-6 cm/s". It is assumed that the acquired current installation progress of the application program is "50%" when the 2^{nd} cutting operation is performed. The terminal finds in the second correspondence that "50%" is corresponding to "4 cm/s", and uses "4 cm/s" as the 2^{nd} cutting speed.

Preferably, the terminal may further combine the two cutting speed acquiring methods described above, and acquire the cutting speed by using the combined method. For example, the terminal may use the first method to acquire the cutting speed when i≤m, and use the second method to acquire the cutting speed when i>m; or the terminal may use the first method to acquire the cutting speed when i≥n, and use the second method to acquire the cutting speed when i<n; or the terminal may use the first method to acquire the cutting speed when i≤m or i≥n, and use the second method to acquire the cutting speed when m<i<n, where m≥1 and n≤j. Certainly, the terminal may further use another combination manner, which is not limited in this embodiment. J is the total number of times of cutting the installation interface of the application program. For example, when j=3, the installation interface of the application program is cut for three times.

Psychologists make a research and find that a memory of a user for experience of something is experience at peak time and end time. However, a proportion of good experience and bad experience in a process, and time lengths of the good experience and the bad experience have little effect on the memory. Based on the research described above, it can be known that experience of a user for the installation speed mainly relies on a cutting speed for predetermined times when installation starts and a cutting speed for predetermined times when the installation ends. Therefore, in order to improve the experience of a user for the installation speed, the terminal can increase the cutting speed for predetermined times when the installation starts and/or increase the cutting speed for predetermined times when the installation ends.

Specifically, the i^{th} cutting speed when i≤m is greater than the i^{th} cutting speed when m<i<n and/or the i^{th} cutting speed when i≥n is greater than the i^{th} cutting speed when m<i<n. Further, the i^{th} cutting speed when i≥n is greater than the i^{th} cutting speed when i≤m.

It is assumed that m=1; n=j=4; the first correspondence stores "1-x cm/s" and "4-2x cm/s"; and the second correspondence stores "1%∼50%-0.3x cm/s" and "51%∼100%-0.5x cm/s". The terminal determines that the 1^{st} cutting speed is "x cm/s" according to the first correspondence; determines that the 2^{nd} cutting speed is "0.3x cm/s" according to the second correspondence if the acquired installation progress is "42%" when the 2^{nd} cutting operation is performed; determines that the 3^{rd} cutting speed is "0.5x cm/s" according to the second correspondence if the acquired installation progress is "69%" when the 3^{rd} cutting operation is performed; and at last determines that the 4^{th} cutting speed is "2x cm/s" according to the first correspondence.

Step 202: Perform the i^{th} cutting operation on the i-1^{th} installation interface according to the i^{th} cutting speed.

The i-1^{th} installation interface refers to an installation interface presented in the terminal before the i^{th} cutting is performed.

Specifically, the performing the i^{th} cutting operation on the i-1^{th} installation interface according to the i^{th} cutting speed includes:
1) generating a cutting origin in a predetermined location on one boundary of the i-1^{th} installation interface;
2) controlling the cutting origin to advance in a predetermined direction at the i^{th} cutting speed; and
3) completing the i^{th} cutting operation when the cutting origin arrives at another boundary of the i-1^{th} installation interface.

The terminal determines one boundary of the i-1^{th} installation interface according to a predetermined algorithm, generates a cutting origin in a predetermined location on the boundary, controls the cutting origin to advance in a predetermined direction at the i^{th} cutting speed; and forms a cutting line between a start point and an endpoint of the cutting origin when the cutting origin arrives at another boundary of the i-1^{th} installation interface, where the cutting line cuts the i-1^{th} installation interface into two interfaces, thereby completing the i^{th} cutting operation.

Optionally, a process in which the cutting origin advances in the predetermined direction may be a preset video. The terminal needs to adjust a playback speed of the video according to the i^{th} cutting speed, so as to play the video in the i-1^{th} installation interface at the adjusted playback speed. Because a video can attract attention of a user and avoid a feeling of waiting caused when the user pays attention to the progress bar, user experience is improved.

Step 203: Determine a reserved i^{th} installation interface after the i^{th} cutting operation is completed.

The terminal may acquire the two interfaces obtained by means of cutting, and select one interface from the two interfaces as the reserved i^{th} installation interface; or the terminal may store installation interfaces, find an installation interface corresponding to the i^{th} cutting from the stored installation interfaces after the i^{th} cutting operation is completed, and determine that the installation interface is the reserved i^{th} installation interface.

Step 204: Replace the i-1^{th} installation interface with the i^{th} installation interface, and present the i^{th} installation interface.

The terminal presents the acquired i^{th} installation interface to replace the i-1^{th} installation interface presented formerly.

Generally, in the process of installing the application program, the terminal acquires the installation progress of the application program in real time, and draws the installation progress acquired each time into the progress bar of the installation interface and presents the installation progress. A process of drawing for multiple times by the terminal consumes a great number of processing resources of the terminal. Therefore, in this embodiment, an installation interface is gradually decreased by cutting the installation interface of the application program, and a speed of an installation progress is embodied by using a size of the installation interface. Because the number of times of replacing the installation interface is much less than the number of times of drawing the installation progress into a progress bar, this embodiment can save the processing resources of the terminal.

Step 205: Update i with i+1, and proceed to perform the step of performing an i^{th} cutting operation on an i-1^{th} installation interface of an application program.

When i<j, i is updated with i+1, and the performing the i^{th} cutting operation on the i-1^{th} installation interface proceeds; and when i=j, i is updated with a value of i+1 and the value is greater than j. At this moment, a cutting process ends.

It should be supplemented that the method further includes:
1) detecting whether the application program completes installation every other predetermined time, and detecting whether what is presented is a j^{th} installation interface every other predetermined time; and
2) playing a predetermined video cyclically on the j^{th} installation interface if it is detected that the application program does not complete the installation and what is presented is the j^{th} installation interface.

If the terminal currently presents the j^{th} installation interface, because the j^{th} installation interface is the last installation interface in the cutting process, it can be determined that the cutting process ends; and if the application program still does not complete the installation at this moment, the terminal can play the predetermined video on the j^{th} installation interface to attract attention of a user by using the predetermined video, so as to reduce the feeling of waiting of the user. If the application program still does not complete the installation after the predetermined video completes playback, the terminal can play the predetermined video cyclically till the terminal detects that the application program completes the installation and stops playing the predetermined video.

The installation interface is formed by a base map and elements added to the base map. Therefore, when the predetermined video is played on the j^{th} installation interface, the terminal may add the predetermined video to the base map of the j^{th} installation interface by using the predetermined video as an element, and play the predetermined video. Optionally, the terminal may further modify another element on the base map of the j^{th} installation interface.

If the terminal currently presents the i^{th} (i<j) installation interface, it is determined that the cutting process has not ended yet; and if the application program completes the installation at this moment, the terminal can increase a cutting speed of each subsequent cutting operation, so as to complete the cutting process as soon as possible.

Further, after the detecting whether the application program completes installation every other predetermined time, and detecting whether what is presented is a j^{th} installation interface, the method further includes:
1) generating an application interface of the application program if it is detected that the application program completes the installation and what is presented is the j^{th} installation interface, where an interface size of the application interface is the same as that of the j^{th} installation interface; and
2) presenting various functions provided by the application program on the application interface.

If the terminal currently presents the j^{th} installation interface, it is determined that the cutting process ends; and if the application program completes the installation at this moment, the terminal may generate the application interface of the application program and present the various functions provided by the application program on the application interface. The application interface is an interface that presents the various functions of the application program in the terminal in the process of running the application program. For example, if the application program is security software, the application interface can present an antivirus function, a garbage cleaning function, a terminal accelerating function, a software management function, a toolkit function, and the like.

Preferably, the terminal may further set the interface size of the application interface to be the same as that of the j^{th} installation interface, so as to embody features of smallness and lightness of the application program by using a small interface obtained by means of cutting. Specifically, because the application interface is small, the application interface presents important functions of the application program. Moreover, unimportant functions are blocked, so that the application program is light, and operation complexity of the application program can also be reduced.

It should be supplemented that in order to enable the user to know the installation progress of the application program, the terminal may further acquire the installation progress every other predetermined time, and present the installation progress on the installation interface in a form of words.

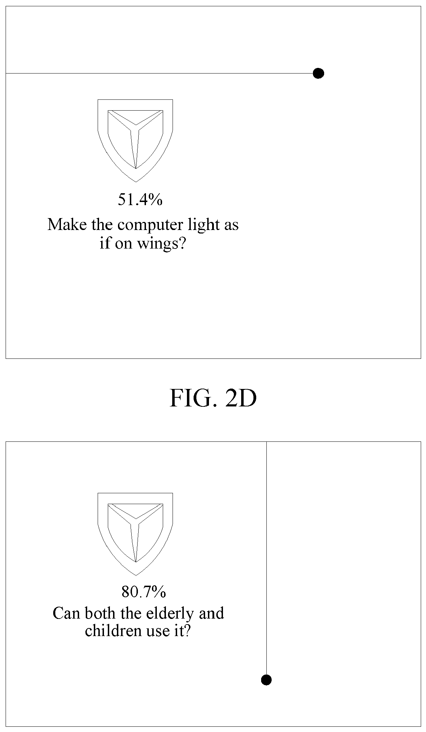

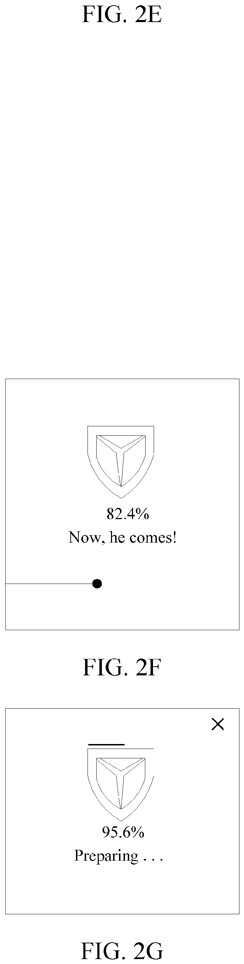

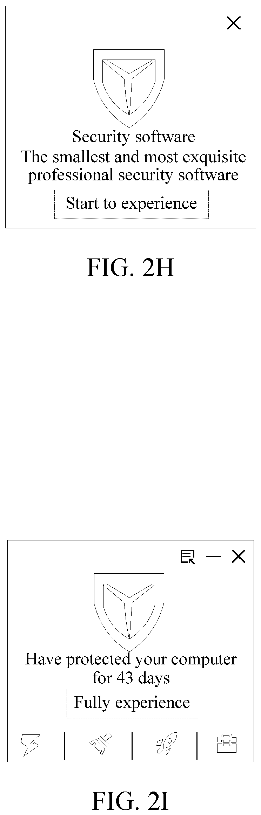

For ease of understanding, this embodiment describes the installation interface presentation method by using that the application program is the security software as an example, and details are as follows.
1. When the terminal runs an installation package of the security software, a schematic diagram of a first interface of an installation interface presentation method shown in FIG. 2B is presented. FIG. 2B presents information such as an icon, a use protocol, and an installation type of the security software. If a user checks "agree with the use protocol", a "find out" button in FIG. 2B is modified from an unclickable state to a clickable state, and the user clicks the "find out" button to start to install the security software.
2. In a process of installing the security software, a schematic diagram of a second interface of an installation interface presentation method shown in FIG. 2C is presented. If it is determined that an interface presented in FIG. 2C is the zeroth installation interface, a black dot in the figure is the cutting origin of the 1^{st} cutting operation set by the terminal, and the cutting origin starts to advance downward at a speed of x cm/s along a perpendicular direction from an upper boundary of the zeroth installation interface.
3. When the cutting origin of the 1^{st} cutting operation arrives at a lower boundary of the zeroth installation interface, the 1^{st} cutting operation is completed. The zeroth installation interface is replaced with the obtained 1^{st} installation interface, and the 1^{st} installation interface is presented. The terminal proceeds to perform the 2^{nd} cutting operation on the 1^{st} installation interface, and a schematic diagram of a third interface of an installation interface presentation method shown in FIG. 2D is presented. A black dot in FIG. 2D is the cutting origin of the 2^{nd} cutting operation set by the terminal, and the cutting origin starts to advance to the right at a speed of 0.3x cm/s along a horizontal direction from a left boundary of the 1^{st} installation interface.
4. When the cutting origin of the 2^{nd} cutting operation arrives at a right boundary of the 1^{st} installation interface, the 2^{nd} cutting operation is completed. The 1^{st} installation interface is replaced with the obtained 2^{nd} installation interface, and the 2^{nd} installation interface is presented. The terminal proceeds to perform the 3^{rd} cutting operation on the 2^{nd} installation interface, and a schematic diagram of a fourth interface of an installation interface presentation method shown in FIG. 2E is presented. A black dot in FIG. 2E is the cutting origin of the 3^{rd} cutting operation set by the terminal, and the cutting origin starts to advance downward at a speed of 0.5x cm/s along a perpendicular direction from an upper boundary of the 2^{nd} installation interface.
5. When the cutting origin of the 3^{rd} cutting operation arrives at a lower boundary of the 2^{nd} installation interface, the 3^{rd} cutting operation is completed. The 2^{nd} installation interface is replaced with the obtained 3^{rd} installation interface, and the 3^{rd} installation interface is presented. The terminal proceeds to perform the 4^{th} cutting operation on the 3^{rd} installation interface, and a schematic diagram of a fifth interface of an installation interface presentation method shown in FIG. 2F is presented. A black dot in FIG. 2F is the cutting origin of the 4^{th} cutting operation set by the terminal, and the cutting origin starts to advance to the right at a speed of 2x cm/s along a horizontal direction from a left boundary of the 3^{rd} installation interface.
6. When the cutting origin of the 4^{th} cutting operation arrives at a right boundary of the 3^{rd} installation interface, the 4^{th} cutting operation is completed. The 3^{rd} installation interface is replaced with the obtained 4^{th} installation interface, and the 4^{th} installation interface is presented. If the terminal detects that the security software does not complete the installation, the terminal reserves a base map of the 4^{th} installation interface, modifies an element presented on the base map, and implements cyclic playback of a video on the 4^{th} installation interface. A schematic diagram of a sixth interface of an installation interface presentation method shown in FIG. 2G is presented. Over an icon in FIG. 2G is a line of a predetermined length, and the video may be that the line moves around the icon.
7. If the terminal detects that the installation of the security software is completed, the terminal still reserves the base map of the 4^{th} installation interface, and modifies the element presented on the 4^{th} installation interface again to obtain a schematic diagram of a seventh interface of an installation interface presentation method shown in FIG. 2H. If the user clicks a "start to experience" button, the terminal presents an application interface of the security software.
8. Referring to a schematic diagram of an eighth interface of an installation interface presentation method shown in FIG. 2I, FIG. 2I presents functions of the security software. Four icons from left to right sequentially represent an antivirus function, a garbage cleaning function, a terminal accelerating function, and a toolkit function. If the user clicks a "fully experience" button, the terminal presents a conventional application interface of the security software, where the conventional application interface is an application interface of the security software provided by the existing technology.

In summary, in the installation interface presentation method according to this embodiment of the present invention, an i^{th} cutting operation is performed on an i-1^{th} installation interface of an application program in a process of installing the application program; a reserved i^{th} installation interface is determined after the i^{th} cutting operation is completed; the i-1^{th} installation interface is replaced with the i^{th} installation interface, and the i^{th} installation interface is presented; and i is updated with i+1, and the step of performing an i^{th} cutting operation on an i-1^{th} installation interface of an application program proceeds to be performed. An installation interface can be gradually decreased by cutting the installation interface of the application program, and a speed of an installation progress is embodied by using a size of the installation interface. Because the number of times of replacing the installation interface is much less than the number of times of drawing the installation progress into a progress bar, a problem of consuming a great number of processing resources of a terminal when the terminal draws the installation progress of the application program into the progress bar for multiple times is solved, and an effect of saving the processing resources of the terminal is achieved.

Moreover, the installation progress of the application program is acquired; the second correspondence is searched for a cutting speed corresponding to the installation progress; and it is determined that the found cutting speed is the i^{th} cutting speed correspond to the i^{th} cutting operation. The cutting speed may be adjusted according to the installation progress, so that an installation interface obtained by means of cutting at the adjusted cutting speed is more approximate to the installation progress, and accuracy of cutting is improved.

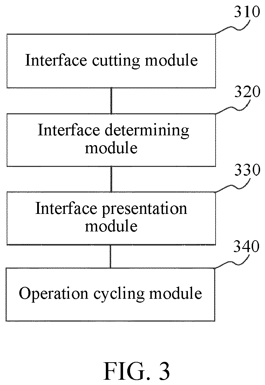

Referring to FIG. 3, FIG. 3 shows a structural block diagram of an installation interface presentation apparatus according to an embodiment of the present invention. The installation interface presentation apparatus can be applied to a terminal, where the terminal may be a smart TV, a smartphone, a tablet computer, or the like. The installation interface presentation apparatus includes:
an interface cutting module 310, configured to perform an i^{th} cutting operation on an i-1^{th} installation interface of an application program in a process of installing the application program, where 1≤i≤j;
an interface determining module 320, configured to determine a reserved i^{th} installation interface after the interface cutting module 310 completes the i^{th} cutting operation;
an interface presentation module 330, configured to replace the i-1^{th} installation interface with the i^{th} installation interface determined by the interface determining module 320, and present the i^{th} installation interface; and
an operation cycling module 340, configured to update i with i+1, and proceed to perform the operation of performing an i^{th} cutting operation on an i-1^{th} installation interface of an application program.

In summary, in the installation interface presentation apparatus according to this embodiment of the present invention, an i^{th} cutting operation is performed on an i-1^{th} installation interface of an application program in a process of installing the application program; a reserved i^{th} installation interface is determined after the i^{th} cutting operation is completed; the i-1^{th} installation interface is replaced with the i^{th} installation interface, and the i^{th} installation interface is presented; and i is updated with i+1, and the step of performing an i^{th} cutting operation on an i-1^{th} installation interface of an application program proceeds to be performed. An installation interface can be gradually decreased by cutting the installation interface of the application program, and a speed of an installation progress is embodied by using a size of the installation interface. Because the number of times of replacing the installation interface is much less than the number of times of drawing the installation progress into a progress bar, a problem of consuming a great number of processing resources of a terminal when the terminal draws the installation progress of the application program into the progress bar for multiple times is solved, and an effect of saving the processing resources of the terminal is achieved.

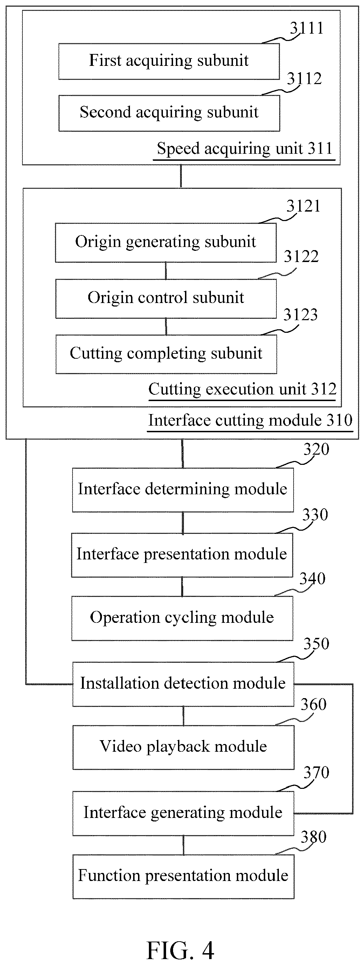

Referring to FIG. 4, FIG. 4 shows a structural block diagram of an installation interface presentation apparatus according to another embodiment of the present invention. The installation interface presentation apparatus can be applied to a terminal, where the terminal may be a smart TV, a smartphone, a tablet computer, or the like. The installation interface presentation apparatus includes: an interface cutting module 310, an interface determining module 320, an interface presentation module 330, and an operation cycling module 340.

The interface cutting module 310 is configured to perform an i^{th} cutting operation on an i-1^{th} installation interface of an application program in a process of installing the application program, where 1≤i≤j.

The interface determining module 320 is configured to determine a reserved i^{th} installation interface after the interface cutting module 310 completes the i^{th} cutting operation.

The interface presentation module 330 is configured to replace the i-1^{th} installation interface with the i^{th} installation interface determined by the interface determining module 320, and present the i^{th} installation interface.

The operation cycling module 340 is configured to update i with i+1, and proceed to perform the operation of performing an i^{th} cutting operation on an i-1^{th} installation interface of an application program.

Optionally, the interface cutting module 310 includes:
a speed acquiring unit 311, configured to acquire an i^{th} cutting speed corresponding to the i^{th} cutting operation; and
a cutting execution unit 312, configured to perform the i^{th} cutting operation on the i-1^{th} installation interface according to the i^{th} cutting speed acquired by the speed acquiring unit 311, where
the i^{th} cutting speed when i≤m is greater than the i^{th} cutting speed when m<i<n and/or the i^{th} cutting speed when i≥n is greater than the i^{th} cutting speed when m<i<n, where m≥1 and n≤j.

Optionally, the speed acquiring unit 311 includes:
a first acquiring subunit 3111, configured to search a first correspondence for a cutting speed corresponding to i, and determine that the found cutting speed is the i^{th} cutting speed correspond to the i^{th} cutting operation; and/or
a second acquiring subunit 3112, configured to acquire an installation progress of the application program, search a second correspondence for a cutting speed corresponding to the installation progress, and determine that the found cutting speed is the i^{th} cutting speed correspond to the i^{th} cutting operation.

Optionally, the cutting execution unit 312 includes:
an origin generating subunit 3121, configured to generate a cutting origin in a predetermined location on one boundary of the i-1^{th} installation interface;
an origin control subunit 3122, configured to control the cutting origin generated by the origin generating subunit 3121 to advance in a predetermined direction at the i^{th} cutting speed; and
a cutting completing subunit 3123, configured to complete the i^{th} cutting operation when the origin control subunit 3122 controls the cutting origin to arrive at another boundary of the i-1^{th} installation interface.

Optionally, the apparatus further includes:
an installation detection module 350, configured to detect whether the application program completes installation every other predetermined time, and detect whether what is presented is a j^{th} installation interface every other predetermined time; and
a video playback module 360, configured to play a predetermined video cyclically on the j^{th} installation interface if the installation detection module 350 detects that the application program does not complete the installation and what is presented is the j^{th} installation interface.

Optionally, the apparatus further includes:
an interface generating module 370, configured to, after the installation detection module 350 detects whether the application program completes the installation every other predetermined time, and detects whether what is presented is the j^{th} installation interface, generate an application interface of the application program when it is detected that the application program completes the installation and what is presented is the j^{th} installation interface, where an interface size of the application interface is the same as that of the j^{th} installation interface; and
a function presentation module 380, configured to present various functions provided by the application program on the application interface generated by the interface generating module 370.

In summary, in the installation interface presentation apparatus according to this embodiment of the present invention, an i^{th} cutting operation is performed on an i-1^{th} installation interface of an application program in a process of installing the application program; a reserved i^{th} installation interface is determined after the i^{th} cutting operation is completed; the i-1^{th} installation interface is replaced with the i^{th} installation interface, and the i^{th} installation interface is presented; and i is updated with i+1, and the step of performing an i^{th} cutting operation on an i-1^{th} installation interface of an application program proceeds to be performed. An installation interface can be gradually decreased by cutting the installation interface of the application program, and a speed of an installation progress is embodied by using a size of the installation interface. Because the number of times of replacing the installation interface is much less than the number of times of drawing the installation progress into a progress bar, a problem of consuming a great number of processing resources of a terminal when the terminal draws the installation progress of the application program into the progress bar for multiple times is solved, and an effect of saving the processing resources of the terminal is achieved.

Moreover, the installation progress of the application program is acquired; the second correspondence is searched for a cutting speed corresponding to the installation progress; and it is determined that the found cutting speed is the i^{th} cutting speed correspond to the i^{th} cutting operation. The cutting speed may be adjusted according to the installation progress, so that an installation interface obtained by means of cutting at the adjusted cutting speed is more approximate to the installation progress, and accuracy of cutting is improved.

It should be noted that division of the above functional modules is only described for exemplary purposes when the installation interface presentation apparatus provided by the foregoing embodiment presents an installation interface. In actual applications, the functions may be allocated to and implemented by different functional modules as required, which means that the internal structure of the installation interface presentation apparatus is divided into different functional modules to complete all or some of the above described functions. In addition, the installation interface presentation apparatus that is provided by the foregoing embodiments is based on the same concept as the installation interface presentation method in the foregoing embodiments. For the specific implementation process, refer to the method embodiments, and the details are not described herein again.

The sequence numbers of the foregoing embodiments of the present invention are merely for the purpose of description, and do not imply the preference among the embodiments.

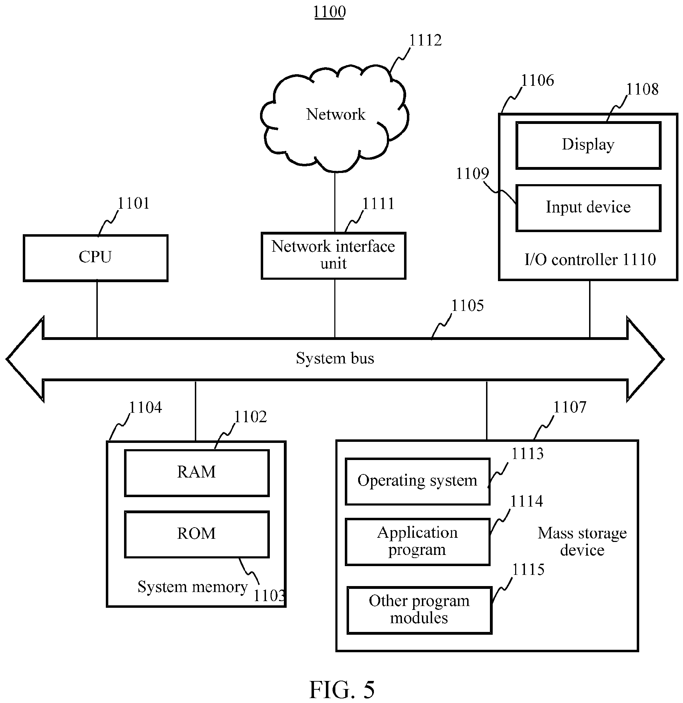

Referring to FIG. 5, FIG. 5 shows a structural block diagram of an installation interface presentation apparatus 1100 according to an embodiment of the present invention. The installation interface presentation apparatus 1100 can be applied to a terminal, where the terminal may be a smart TV, a smartphone, a tablet computer, or the like. The installation interface presentation apparatus 1100 includes a central processing unit (CPU) 1101, a system memory 1104 that includes a random access memory (RAM) 1102 and a read-only memory (ROM) 1103, and a system bus 1105 connecting the system memory 1104 and the CPU 1101. The installation interface presentation apparatus 1100 further includes a basic input/output system (I/O system) 1106 that helps components in a computer transmit information between each other, and a mass storage device 1107 configured to store an operating system 1113, an application program 1114, and other program modules 1115.

The basic I/O system 1106 includes a display 1108 configured to display information and an input device 1109 configured to allow a user to input information, such as a mouse or a keyboard. The display 1108 and the input device 1109 are both connected to the CPU 1101 by means of an input/output (I/O) controller 1110 connected to the system bus 1105. The basic I/O system 1106 may further include the I/O controller 1110 configured to receive and process inputs from multiple other devices such as a keyboard, a mouse, and an electronic stylus. Similarly, the I/O controller 1110 also provides an output to a display screen, a printer or other types of output devices.

The mass storage device 1107 is connected to the CPU 1101 by means of a mass storage controller (not shown) connected to the system bus 1105. The mass storage device 1107 and a related computer readable medium provide nonvolatile storage for the installation interface presentation apparatus 1100. That is, the mass storage device 1107 may include a computer readable medium (not shown) such as a hard disk or a CD-ROM driver.

Without loss of generality, the computer readable medium may include a computer storage medium and a communication medium. The computer storage medium includes volatile and nonvolatile, removable and non-removable media implemented by any method or technology used for storing information such as a computer readable instruction, a data structure, a program module or other data. The computer storage medium includes a RAM, a ROM, an EPROM, an EEPROM, a flash memory or other solid-state storage; a CD-ROM, a DVD or other optical storage; and a cassette, a magnetic tape, a magnetic disk storage or other magnetic storage devices. Certainly, a person skilled in the art may know that the computer storage medium is not limited to those media described above. The system memory 1104 and the mass storage device 1107 may be collectively referred to as a memory.

According to various embodiments of the present invention, the installation interface presentation apparatus 1100 may further be connected to a remote computer on a network for running via a network such as the Internet. That is, the installation interface presentation apparatus 1100 may be connected to a network 1112 by means of a network interface unit 1111 connected to the system bus 1105, or the installation interface presentation apparatus 1100 may also be connected to other types of networks or remote computer systems (not shown) by means of the network interface unit 1111.

The memory further includes one or more programs. The one or more programs are stored in the memory, and the one or more programs contain instructions used for performing the installation interface presentation method according to the embodiments of the present invention.

A person of ordinary skill in the art may understand that all or some of the steps of the foregoing embodiments may be implemented by using hardware, or may be implemented by a program instructing relevant hardware. The program may be stored in a computer readable storage medium. The aforementioned storage medium may be a read-only memory, a magnetic disk, an optical disc, or the like.

## Claims

1. An installation interface presentation method, **characterized by,** comprising:
obtaining (101, 202) two interfaces by performing an i^{th} cutting operation on an i-1^{th} installation interface of an application program in a process of installing the application program, where 1<i≤j, i is an integer, j is an integer, j is total number of times of cutting the installation interface of the application program, installation information is located in a center of the installation interface;
selecting an interface with the installation information from the two interfaces and determining (102, 203) the selected interface as an i^{th} installation interface after the i^{th} cutting operation is completed;
replacing (103, 204) the i-1^{th} installation interface with the i^{th} installation interface, and presenting the reserved i^{th} installation interface; and
updating (104, 205) i with i+1, and proceeding (104) to perform the step of performing an i^{th} cutting operation on an i-1^{th} installation interface of an application program to divide the (i-1)^{th} installation interface into two interfaces,
wherein for j = 4 the method comprises:
(I) for i=1, determining an upper boundary of a zeroth installation interface and generating a cutting origin at a predetermined location on the upper boundary left from the installation information, wherein the cutting origin of a 1^{st} cutting operation on a zeroth installation interface starts to advance downward along a perpendicular direction from the upper boundary of the zeroth installation interface, wherein when the cutting origin of the 1st cutting operation arrives at a lower boundary of the zeroth installation interface, the 1^{st} cutting operation is completed, and the zeroth installation interface is replaced with an obtained 1^{st} installation interface, and the 1^{st} installation interface is presented,
(II) for i=2, determining a left boundary of the 1^{st} installation interface and generating a cutting origin at a predetermined location on the left boundary above the installation information, wherein the cutting origin of a 2^{nd} cutting operation on the 1^{st} installation interface starts to advance to the right along a horizontal direction from the left boundary of the 1^{st} installation interface, wherein when the cutting origin of the 2^{nd} cutting operation arrives at a right boundary of the 1^{st} installation interface, the 2^{nd} cutting operation is completed, and the 1^{st} installation interface is replaced with an obtained 2^{nd} installation interface, and the 2^{nd} installation interface is presented,
(III) for i=3, determining an upper boundary of the 2^{nd} installation interface and generating a cutting origin at a predetermined location on the upper boundary right from the installation information, wherein the cutting origin of a 3^{rd} cutting operation on the 2^{nd} installation interface starts to advance downward along a perpendicular direction from the upper boundary of the 2^{nd} installation interface, wherein when the cutting origin of the 3^{rd} cutting operation arrives at a lower boundary of the 2^{nd} installation interface, the 3^{rd} cutting operation is completed, and the 2^{nd} installation interface is replaced with an obtained 3^{rd} installation interface, and the 3^{rd} installation interface is presented,
(IV) for i=4, determining a left boundary of the 3^{rd} installation interface and generating a cutting origin at a predetermined location on the left boundary below the installation information, wherein the cutting origin of a 4^{th} cutting operation on the 3^{rd} installation interface starts to advance to the right along a horizontal direction from the left boundary of the 3rd installation interface, wherein when the cutting origin of the 4^{th} cutting operation arrives at a right boundary of the 3^{rd} installation interface, the 4^{th} cutting operation is completed, and the 3^{rd} installation interface is replaced with an obtained 4^{th} installation interface, and the 4^{th} installation interface is presented.

2. The method according to claim 1, wherein the performing an i^{th} cutting operation on an i-1^{th} installation interface of an application program comprises:
acquiring (201) an i^{th} cutting speed corresponding to the i^{th} cutting operation; and
performing (202) the i^{th} cutting operation on the i-1^{th} installation interface according to the i^{th} cutting speed, wherein
the i^{th} cutting speed when i≤m is greater than the i^{th} cutting speed when m<i<n and/or the i^{th} cutting speed when i≥n is greater than the i^{th} cutting speed when m<i<n, wherein m≥1 and n≤j.

3. The method according to claim 2, wherein the acquiring an i^{th} cutting speed corresponding to the i^{th} cutting operation comprises:
searching a first correspondence for a cutting speed corresponding to i, and determining that the found cutting speed is the i^{th} cutting speed correspond to the i^{th} cutting operation; and/or
acquiring an installation progress of the application program, searching a second correspondence for a cutting speed corresponding to the installation progress, and determining that the found cutting speed is the i^{th} cutting speed correspond to the i^{th} cutting operation.

4. The method according to claim 2, wherein the performing the i^{th} cutting operation on the i-1^{th} installation interface according to the i^{th} cutting speed comprises:
generating a cutting origin in a predetermined location on one boundary of the i-1^{th} installation interface;
controlling the cutting origin to advance in a predetermined direction at the i^{th} cutting speed; and
completing the i^{th} cutting operation when the cutting origin arrives at another boundary of the i-1^{th} installation interface.

5. The method according to any one of claims 1 to 4, wherein the method further comprises:
detecting whether the application program completes installation every other predetermined time, and detecting whether what is presented is a j^{th} installation interface every other predetermined time; and
playing a predetermined video cyclically on the j^{th} installation interface if it is detected that the application program does not complete the installation and what is presented is the j^{th} installation interface.

6. The method according to claim 5, wherein after the detecting whether the application program completes installation every other predetermined time, and detecting whether what is presented is a j^{th} installation interface, the method further comprises:
generating an application interface of the application program if it is detected that the application program completes the installation and what is presented is the j^{th} installation interface, wherein an interface size of the application interface is the same as that of the j^{th} installation interface; and
presenting various functions provided by the application program on the application interface.

7. An installation interface presentation apparatus, **characterized by**, comprising:
one or more processors;
a memory; and
a plurality of program modules stored in the memory and to be executed by the one or more processors, the plurality of program modules further comprising:
an interface cutting module (310), configured to obtain two interfaces by performing an i^{th} cutting operation on an i-1^{th} installation interface of an application program in a process of installing the application program, where 1<i≤j, i is an integer, j is an integer, j is total number of times of cutting the installation interface of the application program, installation information is located in a center of the installation interface;
an interface determining module (320), configured to select an interface with the installation information from the two interfaces and determine the selected interface as an i^{th} installation interface after the interface cutting module completes the i^{th} cutting operation;
an interface presentation module (330), configured to replace the i-1^{th} installation interface with the i^{th} installation interface determined by the interface determining module, and present the i^{th} installation interface; and
an operation cycling module (340), configured to update i with i+1, and proceed to perform the operation of performing an i^{th} cutting operation on an i-1^{th} installation interface of an application program to divide the (i-1)^{th} installation interface into two interfaces,
wherein for j = 4,
(I), for i=1, an upper boundary of a zeroth installation interface is determined and a cutting origin is generated at a predetermined location on the upper boundary left from the installation information, wherein the cutting origin of a 1^{st} cutting operation on a zeroth installation interface starts to advance downward along a perpendicular direction from the upper boundary of the zeroth installation interface, wherein when the cutting origin of the 1st cutting operation arrives at a lower boundary of the zeroth installation interface, the 1^{st} cutting operation is completed, and the zeroth installation interface is replaced with an obtained 1^{st} installation interface, and the 1^{st} installation interface is presented,
(II), for i=2, a left boundary of the 1^{st} installation interface is determined and a cutting origin is generated at a predetermined location on the left boundary above the installation information, wherein the cutting origin of a 2^{nd} cutting operation on the 1^{st} installation interface starts to advance to the right along a horizontal direction from the left boundary of the 1^{st} installation interface, wherein when the cutting origin of the 2^{nd} cutting operation arrives at a right boundary of the 1^{st} installation interface, the 2^{nd} cutting operation is completed, and the 1^{st} installation interface is replaced with an obtained 2^{nd} installation interface, and the 2^{nd} installation interface is presented,
(III), for i=3, an upper boundary of the 2^{nd} installation interface is determined and a cutting origin is generated at a predetermined location on the upper boundary right from the installation information, wherein the cutting origin of a 3^{rd} cutting operation on the 2^{nd} installation interface starts to advance downward along a perpendicular direction from the upper boundary of the 2^{nd} installation interface, wherein when the cutting origin of the 3^{rd} cutting operation arrives at a lower boundary of the 2^{nd} installation interface, the 3^{rd} cutting operation is completed, and the 2^{nd} installation interface is replaced with an obtained 3^{rd} installation interface, and the 3^{rd} installation interface is presented,
(IV), for i=4, a left boundary of the 3rd installation interface is determined and a cutting origin is generated at a predetermined location on the left boundary below the installation information, wherein the cutting origin of a 4^{th} cutting operation on the 3^{rd} installation interface starts to advance to the right along a horizontal direction from the left boundary of the 3rd installation interface, wherein when the cutting origin of the 4^{th} cutting operation arrives at a right boundary of the 3^{rd} installation interface, the 4^{th} cutting operation is completed, and the 3^{rd} installation interface is replaced with an obtained 4^{th} installation interface, and the 4^{th} installation interface is presented.

8. The apparatus according to claim 7, wherein the interface cutting module comprises:
a speed acquiring unit (311), configured to acquire an i^{th} cutting speed corresponding to the i^{th} cutting operation; and
a cutting execution unit (312), configured to perform the i^{th} cutting operation on the i-1^{th} installation interface according to the i^{th} cutting speed acquired by the speed acquiring unit, wherein
the i^{th} cutting speed when i≤m is greater than the i^{th} cutting speed when m<i<n and/or the i^{th} cutting speed when i≥n is greater than the i^{th} cutting speed when m<i<n, wherein m≥1 and n≤j.

9. The apparatus according to claim 8, wherein the speed acquiring unit comprises:
a first acquiring subunit (3111), configured to search a first correspondence for a cutting speed corresponding to i, and determine that the found cutting speed is the i^{th} cutting speed correspond to the i^{th} cutting operation; and/or
a second acquiring subunit (3112), configured to acquire an installation progress of the application program, search a second correspondence for a cutting speed corresponding to the installation progress, and determine that the found cutting speed is the i^{th} cutting speed correspond to the i^{th} cutting operation.

10. The apparatus according to claim 8, wherein the cutting execution unit comprises:
an origin generating subunit (3121), configured to generate a cutting origin in a predetermined location on one boundary of the i-1^{th} installation interface;
an origin control subunit (3122), configured to control the cutting origin generated by the origin generating subunit to advance in a predetermined direction at the i^{th} cutting speed; and
a cutting completing subunit (3123), configured to complete the i^{th} cutting operation when the origin control subunit controls the cutting origin to arrive at another boundary of the i-1^{th} installation interface.

11. The apparatus according to any one of claims 7 to 10, wherein the apparatus further comprises:
an installation detection module (350), configured to detect whether the application program completes installation every other predetermined time, and detect whether what is presented is a j^{th} installation interface every other predetermined time; and
a video playback module (360), configured to play a predetermined video cyclically on the j^{th} installation interface if the installation detection module detects that the application program does not complete the installation and what is presented is the j^{th} installation interface.

12. The apparatus according to claim 11, wherein the plurality of program modules further comprises:
an interface generating module (370), configured to, after the installation detection module detects whether the application program completes the installation every other predetermined time, and detects whether what is presented is the j^{th} installation interface, generate an application interface of the application program when it is detected that the application program completes the installation and what is presented is the j^{th} installation interface, wherein an interface size of the application interface is the same as that of the j^{th} installation interface; and
a function presentation module (380), configured to present various functions provided by the application program on the application interface generated by the interface generating module.

13. A computer readable storage medium, **characterized by**, storing a computer executable instruction, when executed by a processor, the computer executable instruction performing an installation interface presentation method, the installation interface presentation method comprising:
obtaining two interfaces by performing an i^{th} cutting operation on an i-1^{th} installation interface of an application program in a process of installing the application program, where 1<i≤j, i is an integer, j is an integer, j is total number of times of cutting the installation interface of the application program, installation information is located in a center of the installation interface;
selecting an interface with the installation information from the two interfaces and determining the selected interface as an i^{th} installation interface after the i^{th} cutting operation is completed;
replacing the i-1^{th} installation interface with the i^{th} installation interface, and presenting the i^{th} installation interface; and
updating i with i+1, and proceeding to perform the step of performing an i^{th} cutting operation on an i-1^{th} installation interface of an application program to divide the (i-1)^{th} installation interface into two interfaces,
wherein for j = 4 the method comprises:
(I) for i=1, determining an upper boundary of a zeroth installation interface and generating a cutting origin at a predetermined location on the upper boundary left from the installation information, wherein the cutting origin of a 1^{st} cutting operation on a zeroth installation interface starts to advance downward along a perpendicular direction from the upper boundary of the zeroth installation interface, wherein when the cutting origin of the 1st cutting operation arrives at a lower boundary of the zeroth installation interface, the 1^{st} cutting operation is completed, and the zeroth installation interface is replaced with an obtained 1^{st} installation interface, and the 1^{st} installation interface is presented,
(II) for i=2, determining a left boundary of the 1^{st} installation interface and generating a cutting origin at a predetermined location on the left boundary above the installation information, wherein the cutting origin of a 2^{nd} cutting operation on the 1^{st} installation interface starts to advance to the right along a horizontal direction from the left boundary of the 1^{st} installation interface, wherein when the cutting origin of the 2^{nd} cutting operation arrives at a right boundary of the 1^{st} installation interface, the 2^{nd} cutting operation is completed, and the 1^{st} installation interface is replaced with an obtained 2^{nd} installation interface, and the 2^{nd} installation interface is presented,
(III) for i=3, determining an upper boundary of the 2^{nd} installation interface and generating a cutting origin at a predetermined location on the upper boundary right from the installation information, wherein the cutting origin of a 3^{rd} cutting operation on the 2^{nd} installation interface starts to advance downward along a perpendicular direction from the upper boundary of the 2^{nd} installation interface, wherein when the cutting origin of the 3^{rd} cutting operation arrives at a lower boundary of the 2^{nd} installation interface, the 3^{rd} cutting operation is completed, and the 2^{nd} installation interface is replaced with an obtained 3^{rd} installation interface, and the 3^{rd} installation interface is presented,
(IV) for i=4, determining a left boundary of the 3^{rd} installation interface and generating a cutting origin at a predetermined location on the left boundary below the installation information, wherein the cutting origin of a 4^{th} cutting operation on the 3^{rd} installation interface starts to advance to the right along a horizontal direction from the left boundary of the 3rd installation interface, wherein when the cutting origin of the 4^{th} cutting operation arrives at a right boundary of the 3^{rd} installation interface, the 4^{th} cutting operation is completed, and the 3^{rd} installation interface is replaced with an obtained 4^{th} installation interface, and the 4^{th} installation interface is presented.

14. The computer readable storage medium according to claim 13, wherein the performing an i^{th} cutting operation on an i-1^{th} installation interface of an application program comprises:
acquiring an i^{th} cutting speed corresponding to the i^{th} cutting operation; and
performing the i^{th} cutting operation on the i-1^{th} installation interface according to the i^{th} cutting speed, wherein
the i^{th} cutting speed when i≤m is greater than the i^{th} cutting speed when m<i<n and/or the i^{th} cutting speed when i≥n is greater than the i^{th} cutting speed when m<i<n, wherein m≥1 and n≤j.

15. The computer readable storage medium according to claim 14, wherein the acquiring an i^{th} cutting speed corresponding to the i^{th} cutting operation comprises:
searching a first correspondence for a cutting speed corresponding to i, and determining that the found cutting speed is the i^{th} cutting speed correspond to the i^{th} cutting operation; and/or
acquiring an installation progress of the application program, searching a second correspondence for a cutting speed corresponding to the installation progress, and determining that the found cutting speed is the i^{th} cutting speed correspond to the i^{th} cutting operation.

## Patentansprüche

1. Installationsoberflächenpräsentationsverfahren, **dadurch gekennzeichnet,** das es Folgendes umfasst:
Erhalten (101, 202) von zwei Oberflächen durch Durchführen einer i-ten Schnittoperation an einer i-1-ten Installationsoberfläche eines Anwendungsprogramms in einem Prozess zum Installieren des Anwendungsprogramms, wobei 1<i≤j gilt, i eine ganze Zahl ist, j eine ganze Zahl ist, j die Gesamtanzahl von Schnittvorgängen der Installationsoberfläche des Anwendungsprogramms ist, sich Installationsinformationen in einer Mitte der Installationsoberfläche befinden;
Auswählen einer Oberfläche mit den Installationsinformationen von den zwei Oberflächen und Bestimmen (102, 203) der ausgewählten Oberfläche als eine i-te Installationsoberfläche nach Abschluss der i-ten Schnittoperation;
Ersetzen (103, 204) der i-1-ten Installationsoberfläche mit der i-ten Installationsoberfläche und Präsentieren der reservierten i-ten Installationsoberfläche; und
Aktualisieren (104, 205) von i mit i+1 und Fortfahren (104) mit dem Durchführen des Schritts des Durchführens einer i-ten Schnittoperation an einer i-1-ten Installationsoberfläche eines Anwendungsprogramms, um die (i-1)-te Installationsoberfläche in zwei Oberflächen zu teilen,
wobei das Verfahren für j = 4 Folgendes umfasst:
(I) für i=1, Bestimmen einer oberen Grenze einer nullten Installationsoberfläche und Erzeugen eines Schnittursprungs an einer vorbestimmten Stelle an der oberen Grenze links von den Installationsinformationen, wobei der Schnittursprung einer ersten Schnittoperation an einer nullten Installationsoberfläche beginnt, sich abwärts entlang einer senkrechten Richtung von der oberen Grenze der nullten Installationsoberfläche fortzubewegen, wobei, wenn der Schnittursprung der ersten Schnittoperation zu einer unteren Grenze der nullten Installationsoberfläche gelangt, die erste Schnittoperation abgeschlossen ist und die nullte Installationsoberfläche mit einer erhaltenen ersten Installationsoberfläche ersetzt wird und die erste Installationsoberfläche präsentiert wird,
(II) für i=2, Bestimmen einer linken Grenze der ersten Installationsoberfläche und Erzeugen eines Schnittursprungs an einer vorbestimmten Stelle an der linken Grenze oberhalb der Installationsinformationen, wobei der Schnittursprung einer zweiten Schnittoperation an der ersten Installationsoberfläche beginnt, sich nach rechts entlang einer horizontalen Richtung von der linken Grenze der ersten Installationsoberfläche fortzubewegen, wobei, wenn der Schnittursprung der zweiten Schnittoperation zu einer rechten Grenze der ersten Installationsoberfläche gelangt, die zweite Schnittoperation abgeschlossen ist und die erste Installationsoberfläche mit einer erhaltenen zweiten Installationsoberfläche ersetzt wird und die zweite Installationsoberfläche präsentiert wird,
(III) für i=3, Bestimmen einer oberen Grenze der zweiten Installationsoberfläche und Erzeugen eines Schnittursprungs an einer vorbestimmten Stelle an der oberen Grenze rechts von den Installationsinformationen, wobei der Schnittursprung einer dritten Schnittoperation an der zweiten Installationsoberfläche beginnt, sich abwärts entlang einer senkrechten Richtung von der oberen Grenze der zweiten Installationsoberfläche fortzubewegen, wobei, wenn der Schnittursprung der dritten Schnittoperation zu einer unteren Grenze der zweiten Installationsoberfläche gelangt, die dritte Schnittoperation abgeschlossen ist und die zweite Installationsoberfläche mit einer erhaltenen dritten Installationsoberfläche ersetzt wird und die dritte Installationsoberfläche präsentiert wird,
(IV) für i=4, Bestimmen einer linken Grenze der dritten Installationsoberfläche und Erzeugen eines Schnittursprungs an einer vorbestimmten Stelle an der linken Grenze unterhalb der Installationsinformationen, wobei der Schnittursprung einer vierten Schnittoperation an der dritten Installationsoberfläche beginnt, sich nach rechts entlang einer horizontalen Richtung von der linken Grenze der dritten Installationsoberfläche fortzubewegen, wobei, wenn der Schnittursprung der vierten Schnittoperation zu einer rechten Grenze der dritten Installationsoberfläche gelangt, die vierte Schnittoperation abgeschlossen ist und die dritte Installationsoberfläche mit einer erhaltenen vierten Installationsoberfläche ersetzt wird und die vierte Installationsoberfläche präsentiert wird.

2. Verfahren nach Anspruch 1, wobei das Durchführen einer i-ten Schnittoperation an einer i-1-ten Installationsoberfläche eines Anwendungsprogramms Folgendes umfasst:
Erfassen (201) einer i-ten Schnittgeschwindigkeit, die der i-ten Schnittoperation entspricht; und
Durchführen (202) der i-ten Schnittoperation an der i-1-ten Installationsoberfläche gemäß der i-ten Schnittgeschwindigkeit, wobei
die i-te Schnittgeschwindigkeit bei i≤m größer als die i-te Schnittgeschwindigkeit bei m<i<n ist und/oder die i-te Schnittgeschwindigkeit bei i≥n größer als die i-te Schnittgeschwindigkeit bei m<i<n ist, wobei m≥1 und n≤j gelten.

3. Verfahren nach Anspruch 2, wobei das Erfassen einer i-ten Schnittgeschwindigkeit, die der i-ten Schnittoperation entspricht, Folgendes umfasst:
Suchen nach einer ersten Entsprechung für eine Schnittgeschwindigkeit, die i entspricht, und Bestimmen, dass die gefundene Schnittgeschwindigkeit die i-te Schnittgeschwindigkeit, die der i-ten Schnittoperation entspricht, ist; und/oder
Erfassen eines Installationsfortschritts des Anwendungsprogramms, Suchen nach einer zweiten Entsprechung für eine Schnittgeschwindigkeit, die dem Installationsfortschritt entspricht, und Bestimmen, dass die gefundene Schnittgeschwindigkeit die i-te Schnittgeschwindigkeit, die der i-ten Schnittoperation entspricht, ist.

4. Verfahren nach Anspruch 2, wobei das Durchführen der i-ten Schnittoperation an der i-1-ten Installationsoberfläche gemäß der i-ten Schnittgeschwindigkeit Folgendes umfasst:
Erzeugen eines Schnittursprungs an einer vorbestimmten Stelle an einer Grenze der i-1-ten Installationsoberfläche;
dahingehendes Steuern des Schnittursprungs, sich in einer vorbestimmten Richtung mit der i-ten Schnittgeschwindigkeit fortzubewegen; und
Abschließen der i-ten Schnittoperation, wenn der Schnittursprung zu einer anderen Grenze der i-1-ten Installationsoberfläche gelangt.

5. Verfahren nach einem der Ansprüche 1 bis 4, wobei das Verfahren ferner Folgendes umfasst:
Detektieren, ob das Anwendungsprogramm eine Installation abschließt, jedes zweite vorbestimmte Mal, und Detektieren, ob das, was präsentiert wird, eine j-te Installationsoberfläche ist, jedes zweite vorbestimmte Mal; und
zyklisches Abspielen eines vorbestimmten Videos auf der j-ten Installationsoberfläche, falls detektiert wird, dass das Anwendungsprogramm die Installation nicht abschließt und das, was präsentiert wird, die j-te Installationsoberfläche ist.

6. Verfahren nach Anspruch 5, wobei das Verfahren nach dem Detektieren, ob das Anwendungsprogramm eine Installation abschließt, jedes zweite vorbestimmte Mal, und Detektieren, ob das, was präsentiert wird, eine j-te Installationsoberfläche ist, Folgendes umfasst:
Erzeugen einer Anwendungsoberfläche des Anwendungsprogramms, falls detektiert wird, dass das Anwendungsprogramm die Installation abschließt und das, was präsentiert wird, die j-te Installationsoberfläche ist, wobei eine Oberflächengröße der Anwendungsoberfläche die gleiche wie die der j-ten Installationsoberfläche ist; und
Präsentieren verschiedener durch das Anwendungsprogramm bereitgestellter Funktionen auf der Anwendungsoberfläche.

7. Installationsoberflächenpräsentationseinrichtung, **dadurch gekennzeichnet, dass** sie Folgendes umfasst:
einen oder mehrere Prozessoren;
einen Speicher; und
mehrere Programmmodule, die in dem Speicher gespeichert sind und durch den einen oder die mehreren Prozessoren auszuführen sind, wobei die mehreren Programmmodule ferner Folgendes umfassen:
ein Oberflächenschnittmodul (310), ausgelegt zum Erhalten von zwei Oberflächen durch Durchführen einer i-ten Schnittoperation an einer i-1-ten Installationsoberfläche eines Anwendungsprogramms in einem Prozess zum Installieren des Anwendungsprogramms, wobei 1<i≤j gilt, i eine ganze Zahl ist, j eine ganze Zahl ist, j die Gesamtanzahl von Schnittvorgängen der Installationsoberfläche des Anwendungsprogramms ist, sich Installationsinformationen in einer Mitte der Installationsoberfläche befinden;
ein Oberflächenbestimmungsmodul (320), ausgelegt zum Auswählen einer Oberfläche mit den Installationsinformationen von den zwei Oberflächen und Bestimmen der ausgewählten Oberfläche als eine i-te Installationsoberfläche, nachdem das Oberflächenschnittmodul die i-te Schnittoperation abschließt;
ein Oberflächenpräsentationsmodul (330), ausgelegt zum Ersetzen der i-1-ten Installationsoberfläche mit der durch das Oberflächenbestimmungsmodul bestimmten i-ten Installationsoberfläche und Präsentieren der i-ten Installationsoberfläche; und
ein Operationszyklisierungsmodul (340), ausgelegt zum Aktualisieren von i mit i+1 und Fortfahren mit dem Durchführen der Operation des Durchführens einer i-ten Schnittoperation an einer i-1-ten Installationsoberfläche eines Anwendungsprogramms, um die (i-1)-te Installationsoberfläche in zwei Oberflächen zu teilen,
wobei für j = 4,
(I) für i=1, eine obere Grenze einer nullten Installationsoberfläche bestimmt wird und ein Schnittursprung an einer vorbestimmten Stelle an der oberen Grenze links von den Installationsinformationen erzeugt wird, wobei der Schnittursprung einer ersten Schnittoperation an einer nullten Installationsoberfläche beginnt, sich abwärts entlang einer senkrechten Richtung von der oberen Grenze der nullten Installationsoberfläche fortzubewegen, wobei, wenn der Schnittursprung der ersten Schnittoperation zu einer unteren Grenze der nullten Installationsoberfläche gelangt, die erste Schnittoperation abgeschlossen ist und die nullte Installationsoberfläche mit einer erhaltenen ersten Installationsoberfläche ersetzt wird und die erste Installationsoberfläche präsentiert wird,
(II) für i=2, eine linke Grenze der ersten Installationsoberfläche bestimmt wird und ein Schnittursprung an einer vorbestimmten Stelle an der linken Grenze oberhalb der Installationsinformationen erzeugt wird, wobei der Schnittursprung einer zweiten Schnittoperation an der ersten Installationsoberfläche beginnt, sich nach rechts entlang einer horizontalen Richtung von der linken Grenze der ersten Installationsoberfläche fortzubewegen, wobei, wenn der Schnittursprung der zweiten Schnittoperation zu einer rechten Grenze der ersten Installationsoberfläche gelangt, die zweite Schnittoperation abgeschlossen ist und die erste Installationsoberfläche mit einer erhaltenen zweiten Installationsoberfläche ersetzt wird und die zweite Installationsoberfläche präsentiert wird,
(III) für i=3, eine obere Grenze der zweiten Installationsoberfläche bestimmt wird und ein Schnittursprung an einer vorbestimmten Stelle an der obere Grenze rechts von den Installationsinformationen erzeugt wird, wobei der Schnittursprung einer dritten Schnittoperation an der zweiten Installationsoberfläche beginnt, sich abwärts entlang einer senkrechten Richtung von der oberen Grenze der zweiten Installationsoberfläche fortzubewegen, wobei, wenn der Schnittursprung der dritten Schnittoperation zu einer unteren Grenze der zweiten Installationsoberfläche gelangt, die dritte Schnittoperation abgeschlossen ist und die zweite Installationsoberfläche mit einer erhaltenen dritten Installationsoberfläche ersetzt wird und die dritte Installationsoberfläche präsentiert wird,
(IV) für i=4, eine linke Grenze der dritten Installationsoberfläche bestimmt wird und ein Schnittursprung an einer vorbestimmten Stelle an der linken Grenze unterhalb der Installationsinformationen erzeugt wird, wobei der Schnittursprung einer vierten Schnittoperation an der dritten Installationsoberfläche beginnt, sich nach rechts entlang einer horizontalen Richtung von der linken Grenze der dritten Installationsoberfläche fortzubewegen, wobei, wenn der Schnittursprung der vierten Schnittoperation zu einer rechten Grenze der dritten Installationsoberfläche gelangt, die vierte Schnittoperation abgeschlossen ist und die dritte Installationsoberfläche mit einer erhaltenen vierten Installationsoberfläche ersetzt wird und die vierte Installationsoberfläche präsentiert wird.

8. Einrichtung nach Anspruch 7, wobei das Oberflächenschnittmodul Folgendes umfasst:
eine Geschwindigkeitserfassungseinheit (311), ausgelegt zum Erfassen einer i-ten Schnittgeschwindigkeit, die der i-ten Schnittoperation entspricht; und
eine Schnittausführungseinheit (312), ausgelegt zum Durchführen der i-ten Schnittoperation an der i-1-ten Installationsoberfläche gemäß der durch die Geschwindigkeitserfassungseinheit erfassten i-ten Schnittgeschwindigkeit, wobei
die i-te Schnittgeschwindigkeit bei i≤m größer als die i-te Schnittgeschwindigkeit bei m<i<n ist und/oder die i-te Schnittgeschwindigkeit bei i≥n größer als die i-te Schnittgeschwindigkeit bei m<i<n ist, wobei m≥1 und n≤j gelten.

9. Einrichtung nach Anspruch 8, wobei die Geschwindigkeitserfassungseinheit Folgendes umfasst:
eine erste Erfassungsuntereinheit (3111), ausgelegt zum Suchen nach einer ersten Entsprechung für eine Schnittgeschwindigkeit, die i entspricht, und Bestimmen, dass die gefundene Schnittgeschwindigkeit die i-te Schnittgeschwindigkeit, die der i-ten Schnittoperation entspricht, ist; und/oder
eine zweite Erfassungsuntereinheit (3112), ausgelegt zum Erfassen eines Installationsfortschritts des Anwendungsprogramms, Suchen nach einer zweiten Entsprechung für eine Schnittgeschwindigkeit, die dem Installationsfortschritt entspricht, und Bestimmen, dass die gefundene Schnittgeschwindigkeit die i-te Schnittgeschwindigkeit, die der i-ten Schnittoperation entspricht, ist.

10. Einrichtung nach Anspruch 8, wobei die Schnittausführungseinheit Folgendes umfasst:
eine Ursprungserzeugungsuntereinheit (3121), ausgelegt zum Erzeugen eines Schnittursprungs an einer vorbestimmten Stelle an einer Grenze der i-1-ten Installationsoberfläche;
eine Ursprungssteueruntereinheit (3122), ausgelegt zum dahingehenden Steuern des durch die Ursprungserzeugungsuntereinheit erzeugten Schnittursprungs, sich in einer vorbestimmten Richtung mit der i-ten Schnittgeschwindigkeit fortzubewegen; und
eine Schnittabschlussuntereinheit (3123), ausgelegt zum Abschließen der i-ten Schnittoperation, wenn die Ursprungssteueruntereinheit den Schnittursprung dahingehend steuert, zu einer anderen Grenze der i-1-ten Installationsoberfläche zu gelangen.

11. Einrichtung nach einem der Ansprüche 7 bis 10, wobei die Einrichtung ferner Folgendes umfasst:
ein Installationsdetektionsmodul (350), dazu ausgelegt, jedes zweite vorbestimmte Mal zu detektieren, ob das Anwendungsprogramm eine Installation abschließt, und jedes zweite vorbestimmte Mal zu detektieren, ob das, was präsentiert wird, eine j-te Installationsoberfläche ist; und
ein Videowiedergabemodul (360), ausgelegt zum zyklischen Abspielen eines vorbestimmten Videos auf der j-ten Installationsoberfläche, falls das Installationsdetektionsmodul detektiert, dass das Anwendungsprogramm die Installation nicht abschließt und das, was präsentiert wird, die j-te Installationsoberfläche ist.

12. Einrichtung nach Anspruch 11, wobei die mehreren Programmmodule ferner Folgendes umfassen:
ein Oberflächenerzeugungsmodul (370), ausgelegt zum, nachdem das Installationsdetektionsmodul jedes zweite vorbestimmte Mal detektiert, ob das Anwendungsprogramm die Installation abschließt, und detektiert, ob das, was präsentiert wird, die j-te Installationsoberfläche ist, Erzeugen einer Anwendungsoberfläche des Anwendungsprogramms, wenn detektiert wird, dass das Anwendungsprogramm die Installation abschließt und das, was präsentiert wird, die j-te Installationsoberfläche ist, wobei eine Oberflächengröße der Anwendungsoberfläche die gleiche wie die der j-ten Installationsoberfläche ist; und
ein Funktionspräsentationsmodul (380), ausgelegt zum Präsentieren verschiedener durch das Anwendungsprogramm bereitgestellter Funktionen auf der durch das Oberflächenerzeugungsmodul erzeugten Anwendungsoberfläche.

13. Computerlesbares Speichermedium, **dadurch gekennzeichnet, dass** es computerausführbare Anweisungen speichert, wobei die computerausführbaren Anweisungen bei Ausführung durch einen Prozessor ein Installationsoberflächenpräsentationsverfahren durchführen, wobei das Installationsoberflächenpräsentationsverfahren Folgendes umfasst:
Erhalten von zwei Oberflächen durch Durchführen einer i-ten Schnittoperation an einer i-1-ten Installationsoberfläche eines Anwendungsprogramms in einem Prozess zum Installieren des Anwendungsprogramms, wobei 1<i≤j gilt, i eine ganze Zahl ist, j eine ganze Zahl ist, j die Gesamtanzahl von Schnittvorgängen der Installationsoberfläche des Anwendungsprogramms ist, sich Installationsinformationen in einer Mitte der Installationsoberfläche befinden;
Auswählen einer Oberfläche mit den Installationsinformationen von den zwei Oberflächen und Bestimmen der ausgewählten Oberfläche als eine i-te Installationsoberfläche nach Abschluss der i-ten Schnittoperation;
Ersetzen der i-1-ten Installationsoberfläche mit der i-ten Installationsoberfläche und Präsentieren der i-ten Installationsoberfläche; und
Aktualisieren von i mit i+1 und Fortfahren mit dem Durchführen des Schritts des Durchführens einer i-ten Schnittoperation an einer i-1-ten Installationsoberfläche eines Anwendungsprogramms, um die (i-1)-te Installationsoberfläche in zwei Oberflächen zu teilen,
wobei das Verfahren für j = 4 Folgendes umfasst:
(I) für i=1, Bestimmen einer oberen Grenze einer nullten Installationsoberfläche und Erzeugen eines Schnittursprungs an einer vorbestimmten Stelle an der oberen Grenze links von den Installationsinformationen, wobei der Schnittursprung einer ersten Schnittoperation an einer nullten Installationsoberfläche beginnt, sich abwärts entlang einer senkrechten Richtung von der oberen Grenze der nullten Installationsoberfläche fortzubewegen, wobei, wenn der Schnittursprung der ersten Schnittoperation zu einer unteren Grenze der nullten Installationsoberfläche gelangt, die erste Schnittoperation abgeschlossen ist und die nullte Installationsoberfläche mit einer erhaltenen ersten Installationsoberfläche ersetzt wird und die erste Installationsoberfläche präsentiert wird,
(II) für i=2, Bestimmen einer linken Grenze der ersten Installationsoberfläche und Erzeugen eines Schnittursprungs an einer vorbestimmten Stelle an der linken Grenze oberhalb der Installationsinformationen, wobei der Schnittursprung einer zweiten Schnittoperation an der ersten Installationsoberfläche beginnt, sich nach rechts entlang einer horizontalen Richtung von der linken Grenze der ersten Installationsoberfläche fortzubewegen, wobei, wenn der Schnittursprung der zweiten Schnittoperation zu einer rechten Grenze der ersten Installationsoberfläche gelangt, die zweite Schnittoperation abgeschlossen ist und die erste Installationsoberfläche mit einer erhaltenen zweiten Installationsoberfläche ersetzt wird und die zweite Installationsoberfläche präsentiert wird,
(III) für i=3, Bestimmen einer oberen Grenze der zweiten Installationsoberfläche und Erzeugen eines Schnittursprungs an einer vorbestimmten Stelle an der oberen Grenze rechts von den Installationsinformationen, wobei der Schnittursprung einer dritten Schnittoperation an der zweiten Installationsoberfläche beginnt, sich abwärts entlang einer senkrechten Richtung von der oberen Grenze der zweiten Installationsoberfläche fortzubewegen, wobei, wenn der Schnittursprung der dritten Schnittoperation zu einer unteren Grenze der zweiten Installationsoberfläche gelangt, die dritte Schnittoperation abgeschlossen ist und die zweite Installationsoberfläche mit einer erhaltenen dritten Installationsoberfläche ersetzt wird und die dritte Installationsoberfläche präsentiert wird,
(IV) für i=4, Bestimmen einer linken Grenze der dritten Installationsoberfläche und Erzeugen eines Schnittursprungs an einer vorbestimmten Stelle an der linken Grenze unterhalb der Installationsinformationen, wobei der Schnittursprung einer vierten Schnittoperation an der dritten Installationsoberfläche beginnt, sich nach rechts entlang einer horizontalen Richtung von der linken Grenze der dritten Installationsoberfläche fortzubewegen, wobei, wenn der Schnittursprung der vierten Schnittoperation zu einer rechten Grenze der dritten Installationsoberfläche gelangt, die vierte Schnittoperation abgeschlossen ist und die dritte Installationsoberfläche mit einer erhaltenen vierten Installationsoberfläche ersetzt wird und die vierte Installationsoberfläche präsentiert wird.

14. Computerlesbares Speichermedium nach Anspruch 13, wobei das Durchführen einer i-ten Schnittoperation an einer i-1-ten Installationsoberfläche eines Anwendungsprogramms Folgendes umfasst:
Erfassen einer i-ten Schnittgeschwindigkeit, die der i-ten Schnittoperation entspricht; und
Durchführen der i-ten Schnittoperation an der i-1-ten Installationsoberfläche gemäß der i-ten Schnittgeschwindigkeit, wobei
die i-te Schnittgeschwindigkeit bei i≤m größer als die i-te Schnittgeschwindigkeit bei m<i<n ist und/oder die i-te Schnittgeschwindigkeit bei i≥n größer als die i-te Schnittgeschwindigkeit bei m<i<n ist, wobei m≥1 und n≤j gelten.

15. Computerlesbares Speichermedium nach Anspruch 14, wobei das Erfassen einer i-ten Schnittgeschwindigkeit, die der i-ten Schnittoperation entspricht, Folgendes umfasst:
Suchen nach einer ersten Entsprechung für eine Schnittgeschwindigkeit, die i entspricht, und Bestimmen, dass die gefundene Schnittgeschwindigkeit die i-te Schnittgeschwindigkeit, die der i-ten Schnittoperation entspricht, ist; und/oder
Erfassen eines Installationsfortschritts des Anwendungsprogramms, Suchen nach einer zweiten Entsprechung für eine Schnittgeschwindigkeit, die dem Installationsfortschritt entspricht, und Bestimmen, dass die gefundene Schnittgeschwindigkeit die i-te Schnittgeschwindigkeit, die der i-ten Schnittoperation entspricht, ist.

## Revendications

1. Procédé de présentation d'interface d'installation, **caractérisé en ce qu'**il comprend les étapes suivantes :
obtenir (101, 202) deux interfaces en effectuant une i^{ème} opération de coupe sur une i-1^{ème} interface d'installation d'un programme d'application dans un processus d'installation du programme d'application, où 1 < i ≤ j, i est un nombre entier, j est un nombre entier, j est le nombre total de fois où est coupée l'interface d'installation du programme d'application, les informations d'installation sont situées dans un centre de l'interface d'installation ;
sélectionner une interface avec les informations d'installation parmi les deux interfaces et déterminer (102, 203) l'interface sélectionnée comme i^{ème} interface d'installation après que la i^{ème} opération de coupe s'est terminée ;
remplacer (103, 204) la i-1^{ème} interface d'installation par la i^{ème} interface d'installation, et présenter la i^{ème} interface d'installation réservée ; et
mettre à jour (104, 205) i avec i+1, et procéder (104) à l'exécution de l'étape comprenant d'effectuer une i^{ème} opération de coupe sur une i-1^{ème} interface d'installation d'un programme d'application pour diviser la (i-1)^{ème} interface d'installation en deux interfaces,
où, pour j = 4, le procédé comprend les étapes suivantes :
(I) pour i = 1, déterminer une limite supérieure d'une interface d'installation de rang zéro et générer une origine de coupe à un emplacement prédéterminé sur la limite supérieure à gauche des informations d'installation, où l'origine de coupe d'une 1^{ère} opération de coupe sur une interface d'installation de rang zéro commence à avancer vers le bas le long d'une direction perpendiculaire à partir de la limite supérieure de l'interface d'installation de rang zéro, où, lorsque l'origine de coupe de la 1^{ère} opération de coupe arrive à une limite inférieure de l'interface d'installation de rang zéro, la 1^{ère} opération de coupe est achevée, et l'interface d'installation de rang zéro est remplacée par une 1^{ère} interface d'installation obtenue, et la 1^{ère} interface d'installation est présentée,
(II) pour i = 2, déterminer une limite gauche de la 1^{ère} interface d'installation et générer une origine de coupe à un emplacement prédéterminé sur la limite gauche au-dessus des informations d'installation, où l'origine de coupe d'une 2^{ème} opération de coupe sur la 1^{ère} interface d'installation commence à avancer vers la droite le long d'une direction horizontale à partir de la limite gauche de la 1^{ère} interface d'installation, où, lorsque l'origine de coupe de la 2^{ème} opération de coupe arrive à une limite droite de la 1^{ère} interface d'installation, la 2^{ème} opération de coupe se termine, et la 1^{ère} interface d'installation est remplacée par une 2^{ème} interface d'installation obtenue, et la 2^{ème} interface d'installation est présentée,
(III) pour i = 3, déterminer une limite supérieure de la 2^{ème} interface d'installation et générer une origine de coupe à un emplacement prédéterminé sur la limite supérieure à droite des informations d'installation, où l'origine de coupe d'une 3^{ème} opération de coupe sur la 2^{ème} interface d'installation commence à avancer vers le bas le long d'une direction perpendiculaire à partir de la limite supérieure de la 2^{ème} interface d'installation, où, lorsque l'origine de coupe de la 3^{ème} opération de coupe arrive à une limite inférieure de la 2^{ème} interface d'installation, la 3^{ème} opération de coupe se termine, et la 2^{ème} interface d'installation est remplacée par une 3^{ème} interface d'installation obtenue, et la 3^{ème} interface d'installation est présentée,
(IV) pour i = 4, déterminer une limite gauche de la 3^{ème} interface d'installation et générer une origine de coupe à un emplacement prédéterminé sur la limite gauche sous les informations d'installation, où l'origine de coupe d'une 4^{ème} opération de coupe sur la 3^{ème} interface d'installation commence à avancer vers la droite le long d'une direction horizontale à partir de la limite gauche de la 3^{ème} interface d'installation, où, lorsque l'origine de coupe de la 4^{ème} opération de coupe arrive à une limite droite de la 3^{ème} interface d'installation, la 4^{ème} opération de coupe se termine, et la 3^{ème} interface d'installation est remplacée par une 4^{ème} interface d'installation obtenue, et la 4^{ème} interface d'installation est présentée.

2. Procédé selon la revendication 1, dans lequel l'exécution d'une i^{ème} opération de coupe sur une i-1^{ème} interface d'installation d'un programme d'application comprend les étapes suivantes :
acquérir (201) une i^{ème} vitesse de coupe correspondant à la i^{ème} opération de coupe ; et
exécuter (202) la i^{ème} opération de coupe sur la i-1^{ème} interface d'installation en fonction de la i^{ème} vitesse de coupe, où
la i^{ème} vitesse de coupe lorsque i ≤ m est supérieure à la i^{ème} vitesse de coupe lorsque m < i < n et/ou la i^{ème} vitesse de coupe lorsque i ≥ n est supérieure à la i^{ème} vitesse de coupe lorsque m < i < n, où m ≥ 1 et n ≤ j.

3. Procédé selon la revendication 2, dans lequel l'acquisition d'une i^{ème} vitesse de coupe correspondant à la i^{ème} opération de coupe comprend les étapes suivantes :
rechercher dans une première correspondance une vitesse de coupe correspondant à i, et déterminer que la vitesse de coupe trouvée est la i^{ème} vitesse de coupe correspondant à la i^{ème} opération de coupe ; et/ou
acquérir une progression d'installation du programme d'application, rechercher dans une seconde correspondance une vitesse de coupe correspondant à la progression d'installation, et déterminer que la vitesse de coupe trouvée est la i^{ème} vitesse de coupe correspondant à la i^{ème} opération de coupe.

4. Procédé selon la revendication 2, dans lequel la réalisation de la i^{ème} opération de coupe sur la i-1^{ème} interface d'installation en fonction de la i^{ème} vitesse de coupe comprend les étapes suivantes :
générer une origine de coupe dans un emplacement prédéterminé sur une limite de la i-1^{ème} interface d'installation ;
contrôler l'origine de coupe pour avancer dans une direction prédéterminée à la i^{ème} vitesse de coupe ; et
achever la i^{ème} opération de coupe lorsque l'origine de coupe arrive à une autre limite de la i-1^{ème} interface d'installation.

5. Procédé selon l'une quelconque des revendications 1 à 4, dans lequel le procédé comprend en outre les étapes suivantes :
détecter si le programme d'application termine l'installation tous les autres temps prédéterminés, et détecter si ce qui est présenté est une j^{ème} interface d'installation tous les autres temps prédéterminés ; et
lire de manière cyclique une vidéo prédéterminée sur la j^{ème} interface d'installation s'il est détecté que le programme d'application ne termine pas l'installation et que ce qui est présenté est la j^{ème} interface d'installation.

6. Procédé selon la revendication 5, dans lequel, après avoir détecté si le programme d'application termine l'installation tous les autres temps prédéterminés, et détecté si ce qui est présenté est une j^{ème} interface d'installation, le procédé comprend en outre les étapes suivantes :
générer une interface d'application du programme d'application s'il est détecté que le programme d'application termine l'installation et que ce qui est présenté est la j^{ème} interface d'installation, où une taille d'interface de l'interface d'application est la même que celle de la j^{ème} interface d'installation ; et
présenter diverses fonctions fournies par le programme d'application sur l'interface d'application.

7. Appareil de présentation d'interface d'installation, **caractérisé en ce qu'**il comprend :
un ou plusieurs processeurs ;
une mémoire ; et
une pluralité de modules de programme stockés dans la mémoire et destinés à être exécutés par les un ou plusieurs processeurs, la pluralité de modules de programme comprenant en outre :
un module de coupe d'interface (310), configuré pour obtenir deux interfaces en effectuant une i^{ème} opération de coupe sur une i-1^{ème} interface d'installation d'un programme d'application dans un processus d'installation du programme d'application, où 1 < i ≤ j, i est un entier, j est un entier, j est le nombre total de fois où est coupée l'interface d'installation du programme d'application, les informations d'installation sont situées dans un centre de l'interface d'installation ;
un module de détermination d'interface (320), configuré pour sélectionner une interface avec les informations d'installation parmi les deux interfaces et déterminer l'interface sélectionnée comme i^{ème} interface d'installation après que le module de coupe d'interface a terminé la i^{ème} opération de coupe ;
un module de présentation d'interface (330), configuré pour remplacer la i-1^{ème} interface d'installation par la i^{ème} interface d'installation déterminée par le module de détermination d'interface, et présenter la i^{ème} interface d'installation ; et
un module de cycle d'opération (340), configuré pour mettre à jour i avec i+1, et poursuivre par l'exécution de l'opération comprenant d'effectuer une ième opération de coupe sur une i-1^{ème} interface d'installation d'un programme d'application pour diviser la (i-1)^{ème} interface d'installation en deux interfaces,
où, pour j = 4,
(I), pour i = 1, une limite supérieure d'une interface d'installation de rang zéro est déterminée et une origine de coupe est générée à un emplacement prédéterminé sur la limite supérieure à gauche des informations d'installation, où l'origine de coupe d'une 1^{ère} opération de coupe sur une interface d'installation de rang zéro commence à avancer vers le bas le long d'une direction perpendiculaire à partir de la limite supérieure de l'interface d'installation de rang zéro, où, lorsque l'origine de coupe de la 1^{ère} opération de coupe arrive à une limite inférieure de l'interface d'installation de rang zéro, la 1^{ère} opération de coupe est terminée, et l'interface d'installation de rang zéro est remplacée par une 1^{ère} interface d'installation obtenue, et la 1^{ère} interface d'installation est présentée,
(II), pour i = 2, une limite gauche de la 1^{ère} interface d'installation est déterminée et une origine de coupe est générée à un emplacement prédéterminé sur la limite gauche au-dessus des informations d'installation, où l'origine de coupe d'une 2^{ème} opération de coupe sur la 1^{ère} interface d'installation commence à avancer vers la droite le long d'une direction horizontale à partir de la limite gauche de la 1^{ère} interface d'installation, où, lorsque l'origine de coupe de la 2^{ème} opération de coupe arrive à une limite droite de la 1^{ère} interface d'installation, la 2^{ème} opération de coupe se termine, et la 1^{ère} interface d'installation est remplacée par une 2^{ème} interface d'installation obtenue, et la 2^{ème} interface d'installation est présentée,
(III), pour i = 3, une limite supérieure de la 2^{ème} interface d'installation est déterminée et une origine de coupe est générée à un emplacement prédéterminé sur la limite supérieure à droite des informations d'installation, où l'origine de coupe d'une 3^{ème} opération de coupe sur la 2^{ème} interface d'installation commence à avancer vers le bas le long d'une direction perpendiculaire à partir de la limite supérieure de la 2^{ème} interface d'installation, où, lorsque l'origine de coupe de la 3^{ème} opération de coupe arrive à une limite inférieure de la 2^{ème} interface d'installation, la 3^{ème} opération de coupe se termine, et la 2^{ème} interface d'installation est remplacée par une 3^{ème} interface d'installation obtenue, et la 3^{ème} interface d'installation est présentée,
(IV), pour i = 4, une limite gauche de la 3^{ème} interface d'installation est déterminée et une origine de coupe est générée à un emplacement prédéterminé sur la limite gauche sous les informations d'installation, où l'origine de coupe d'une 4^{ème} opération de coupe sur la 3^{ème} interface d'installation commence à avancer vers la droite le long d'une direction horizontale à partir de la limite gauche de la 3^{ème} interface d'installation, où, lorsque l'origine de coupe de la 4^{ème} opération de coupe arrive à une limite droite de la 3^{ème} interface d'installation, la 4^{ème} opération de coupe se termine, et la 3^{ème} interface d'installation est remplacée par une 4^{ème} interface d'installation obtenue, et la 4^{ème} interface d'installation est présentée.

8. Appareil selon la revendication 7, dans lequel le module de coupe d'interface comprend :
une unité d'acquisition de vitesse (311), configurée pour acquérir une i^{ème} vitesse de coupe correspondant à la i^{ème} opération de coupe ; et
une unité d'exécution de coupe (312), configurée pour réaliser la i^{ème} opération de coupe sur la i-1^{ème} interface d'installation en fonction de la i^{ème} vitesse de coupe acquise par l'unité d'acquisition de vitesse, où
la i^{ème} vitesse de coupe lorsque i ≤ m est supérieure à la i^{ème} vitesse de coupe lorsque m < i < n et/ou la i^{ème} vitesse de coupe lorsque i ≥ n est supérieure à la i^{ème} vitesse de coupe lorsque m < i < n, où m ≥ 1 et n ≤ j.

9. Appareil selon la revendication 8, dans lequel l'unité d'acquisition de vitesse comprend :
une première sous-unité d'acquisition (3111), configurée pour rechercher dans une première correspondance une vitesse de coupe correspondant à i, et déterminer que la vitesse de coupe trouvée est la i^{ème} vitesse de coupe correspondant à la i^{ème} opération de coupe ; et/ou
une deuxième sous-unité d'acquisition (3112), configurée pour acquérir une progression d'installation du programme d'application, rechercher une deuxième correspondance pour une vitesse de coupe correspondant à la progression d'installation, et déterminer que la vitesse de coupe trouvée est la i^{ème} vitesse de coupe correspondant à la i^{ème} opération de coupe.

10. Appareil selon la revendication 8, dans lequel l'unité d'exécution de coupe comprend :
une sous-unité de génération d'origine (3121), configurée pour générer une origine de coupe à un emplacement prédéterminé sur une limite de la i-1^{ème} interface d'installation ;
une sous-unité de contrôle d'origine (3122), configurée pour contrôler l'origine de coupe générée par la sous-unité de génération d'origine pour avancer dans une direction prédéterminée à la i^{ème} vitesse de coupe ; et
une sous-unité d'achèvement de coupe (3123), configurée pour achever la i^{ème} opération de coupe lorsque la sous-unité de contrôle d'origine contrôle l'origine de coupe pour arriver à une autre limite de la i-1^{ème} interface d'installation.

11. Appareil selon l'une quelconque des revendications 7 à 10, dans lequel l'appareil comprend en outre :
un module de détection d'installation (350), configuré pour détecter si le programme d'application termine l'installation tous les autres temps prédéterminés, et détecter si ce qui est présenté est une j^{ème} interface d'installation tous les autres temps prédéterminés ; et
un module de lecture vidéo (360), configuré pour lire une vidéo prédéterminée de manière cyclique sur la j^{ème} interface d'installation si le module de détection d'installation détecte que le programme d'application ne termine pas l'installation et que ce qui est présenté est la j^{ème} interface d'installation.

12. Appareil selon la revendication 11, dans lequel la pluralité de modules de programme comprend en outre :
un module de génération d'interface (370), configuré pour, après que le module de détection d'installation a détecté si le programme d'application termine l'installation à chaque autre moment prédéterminé, et détecte si ce qui est présenté est la j^{ème} interface d'installation, générer une interface d'application du programme d'application lorsqu'il est détecté que le programme d'application termine l'installation et que ce qui est présenté est la j^{ème} interface d'installation, où une taille d'interface de l'interface d'application est la même que celle de la j^{ème} interface d'installation ; et
un module de présentation de fonction (380), configuré pour présenter diverses fonctions fournies par le programme d'application sur l'interface d'application générée par le module de génération d'interface.

13. Support de stockage lisible par ordinateur, **caractérisé par** le stockage d'une instruction exécutable par ordinateur qui, lorsqu'elle est exécutée par un processeur, exécute un procédé de présentation d'interface d'installation, le procédé de présentation d'interface d'installation comprenant les étapes suivantes :
obtenir deux interfaces en effectuant une i^{ème} opération de coupe sur une j-1^{ème} interface d'installation d'un programme d'application dans un processus d'installation du programme d'application, où 1 < i ≤ j, i est un entier, j est un entier, j est le nombre total de fois où est coupée l'interface d'installation du programme d'application, les informations d'installation sont situées dans un centre de l'interface d'installation ;
sélectionner une interface avec les informations d'installation parmi les deux interfaces et déterminer l'interface sélectionnée comme i^{ème} interface d'installation après que la i^{ème} opération de coupe a été terminée ;
remplacer la i-1^{ème} interface d'installation par la i^{ème} interface d'installation, et présenter la i^{ème} interface d'installation ; et
mettre à jour i avec i+1, et procéder à l'exécution de l'étape consistant à effectuer une i^{ème} opération de coupe sur une i-1^{ème} interface d'installation d'un programme d'application pour diviser la (i-1)^{ème} interface d'installation en deux interfaces,
où, pour j = 4, le procédé comprend les étapes suivantes :
(I) pour i = 1, déterminer une limite supérieure d'une interface d'installation de rang zéro et générer une origine de coupe à un emplacement prédéterminé sur la limite supérieure à gauche des informations d'installation, où l'origine de coupe d'une 1^{ère} opération de coupe sur une interface d'installation de rang zéro commence à avancer vers le bas le long d'une direction perpendiculaire à partir de la limite supérieure de l'interface d'installation de rang zéro, où, lorsque l'origine de coupe de la 1^{ère} opération de coupe arrive à une limite inférieure de l'interface d'installation de rang zéro, la 1^{ère} opération de coupe est achevée, et l'interface d'installation de rang zéro est remplacée par une 1^{ère} interface d'installation obtenue, et la 1^{ère} interface d'installation est présentée,
(II) pour i = 2, déterminer une limite gauche de la 1^{ère} interface d'installation et générer une origine de coupe à un emplacement prédéterminé sur la limite gauche au-dessus des informations d'installation, où l'origine de coupe d'une 2^{ème} opération de coupe sur la 1^{ère} interface d'installation commence à avancer vers la droite le long d'une direction horizontale à partir de la limite gauche de la 1^{ère} interface d'installation, où, lorsque l'origine de coupe de la 2^{ème} opération de coupe arrive à une limite droite de la 1^{ère} interface d'installation, la 2^{ème} opération de coupe se termine, et la 1^{ère} interface d'installation est remplacée par une 2^{ème} interface d'installation obtenue, et la 2^{ème} interface d'installation est présentée,
(III) pour i = 3, déterminer une limite supérieure de la 2^{ème} interface d'installation et générer une origine de coupe à un emplacement prédéterminé sur la limite supérieure à droite des informations d'installation, où l'origine de coupe d'une 3^{ème} opération de coupe sur la 2^{ème} interface d'installation commence à avancer vers le bas le long d'une direction perpendiculaire à partir de la limite supérieure de la 2^{ème} interface d'installation, où, lorsque l'origine de coupe de la 3^{ème} opération de coupe arrive à une limite inférieure de la 2^{ème} interface d'installation, la 3^{ème} opération de coupe se termine, et la 2^{ème} interface d'installation est remplacée par une 3^{ème} interface d'installation obtenue, et la 3^{ème} interface d'installation est présentée,
(IV) pour i = 4, déterminer une limite gauche de la 3^{ème} interface d'installation et générer une origine de coupe à un emplacement prédéterminé sur la limite gauche sous les informations d'installation, où l'origine de coupe d'une 4^{ème} opération de coupe sur la 3^{ème} interface d'installation commence à avancer vers la droite le long d'une direction horizontale à partir de la limite gauche de la 3^{ème} interface d'installation, où, lorsque l'origine de coupe de la 4^{ème} opération de coupe arrive à une limite droite de la 3^{ème} interface d'installation, la 4^{ème} opération de coupe se termine, et la 3^{ème} interface d'installation est remplacée par une 4^{ème} interface d'installation obtenue, et la 4^{ème} interface d'installation est présentée.

14. Support de stockage lisible par ordinateur selon la revendication 13, dans lequel l'exécution d'une i^{ème} opération de coupe sur une i-1^{ème} interface d'installation d'un programme d'application comprend les étapes suivantes :
acquérir une i^{ème} vitesse de coupe correspondant à la i^{ème} opération de coupe ; et
exécuter la i^{ème} opération de coupe sur la i-1^{ème} interface d'installation en fonction de la i^{ème} vitesse de coupe, où
la i^{ème} vitesse de coupe lorsque i ≤ m est supérieure à la i^{ème} vitesse de coupe lorsque m < i < n et/ou la i^{ème} vitesse de coupe lorsque i ≥ n est supérieure à la i^{ème} vitesse de coupe lorsque m < i < n, où m ≥ 1 et n ≤ j.

15. Support de stockage lisible par ordinateur selon la revendication 14, dans lequel l'acquisition d'une i^{ème} vitesse de coupe correspondant à la i^{ème} opération de coupe comprend les étapes suivantes :
rechercher dans une première correspondance une vitesse de coupe correspondant à i, et déterminer que la vitesse de coupe trouvée est la i^{ème} vitesse de coupe correspondant à la i^{ème} opération de coupe ; et/ou
acquérir une progression d'installation du programme d'application, rechercher dans une seconde correspondance une vitesse de coupe correspondant à la progression d'installation, et déterminer que la vitesse de coupe trouvée est la i^{ème} vitesse de coupe correspondant à la i^{ème} opération de coupe.
